(19) Europäisches Patentamt
European Patent Office
Office européen des brevets

(11) EP 4 682 178 A1

(12) EUROPEAN PATENT APPLICATION

(43) Date of publication:
**21.01.2026 Bulletin 2026/04**

(21) Application number: **24315351.7**

(22) Date of filing: **19.07.2024**

(51) International Patent Classification (IPC):
***C08F 8/42*** *(2006.01)*

(52) Cooperative Patent Classification (CPC):
(C-Sets available)
**C08F 8/42;** C08F 2810/20 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **PARIS SCIENCES ET LETTRES**
  **75006 Paris (FR)**
- **Ecole Supérieure de Physique et de Chimie Industrielles de la Ville de Paris**
  **75005 Paris (FR)**
- **Centre National de la Recherche Scientifique**
  **75016 Paris (FR)**

(72) Inventors:
- **Nicolaÿ, Renaud**
  **75005 PARIS (FR)**
- **Van Zee, Nathan**
  **75005 PARIS (FR)**
- **Quinteros-Sedano, Alvaro**
  **75005 PARIS (FR)**
- **Le Besnerais, Brieuc**
  **75005 PARIS (FR)**

(74) Representative: **Cabinet Chaillot**
**16/20, avenue de l'Agent Sarre**
**B.P. 74**
**92703 Colombes Cedex (FR)**

# (54) MATERIAL UNDER THE FORM OF A NETWORK OF CROSSLINKED POLYMER(S) EXHIBITING GOOD MECHANICAL PROPERTIES BASED ON DIOXAZABOROCANES

(57) The invention relates to a material under the form of a network of crosslinked polymer(s) comprising:
- at least one polymer P carrying pendant groups p1; and
- at least one compound C carrying groups p2,
said pendant groups p1 each comprising a linking arm binding it to its polymer backbone and being terminated by a function constituting one exchange partner, and said groups p2 each comprising a function constituting the other exchange partner, the at least one polymer P and the least one compound C reacting together through pendant groups p1 and groups p2 via exchange reaction resulting in crosslinking points, and the crosslinking points being able to get exchanged with another crosslinking point through an exchange reactión, and/or being able to be released through an exchange reaction with a non-polymer co-product of the exchange reaction.

EP 4 682 178 A1

(52) Cooperative Patent Classification (CPC): (Cont.)

C-Sets
**C08F 220/1808, C08F 220/1812, C08F 230/06;**
**C08F 220/1812, C08F 220/1808, C08F 230/06**

## Description

This work was in part funded by the Stichting Dutch Polymer Institute (DPI).

The present invention relates to a material under the form of a network of crosslinked polymer(s) having good mechanical properties.

In contrast to conventional thermosets, vitrimers and covalent adaptable networks (CANs) are polymers crosslinked by dynamic covalent bonds that behave like viscoelastic solids at low temperatures and viscoelastic liquids at high temperature thanks to degenerate exchange reactions taking place above the topology freezing transition temperature ($T_v$) leading to a topological reshuffling of the network as temperature increases while maintaining an average crosslinking density across a large temperature window. So, this characteristic in addition to some other features such as adhesion, self-healing properties and the ease of incorporation of dynamic bonds to already existing matrices, place vitrimers in particular and CANs in general as an emerging and promising class of materials for recycling and upcycling applications.

Many chemistries such as esters, imines, vinylogous urethanes, disulfides or boronic esters are available to make vitrimers and CANs. Particularly, boronic esters have tremendous potential in material science applications because they exhibit excellent thermal and oxidative stability, low toxicity and do not need a catalyst to undergo exchange. For cyclic boronic esters, depending on the size of the ring they can be classified into dioxaborolanes (five-membered ring) or dioxaborinanes (6-membered ring), both possessing different hydrolytic stability and activation energy for the exchange reaction. Following this, both boronic esters have been used to make vitrimers and CANs manifesting good features in terms of stress-relaxation and self-healing abilities.

Furthermore, a scarcely explored type of cyclic boronic esters featuring a dative bond N,B, known as dioxazaborocanes, arose as a potentially interesting functional group to make vitrimers and CANs. Historically, dioxazaborocanes have been used as protective groups for Suzuki-Miyaura coupling or as intermediate products to characterize and further isolate boronic acids. They are easy to purify and highly stable towards humidity even over the course of several years.

Another interesting feature is that the dative N,B bond becomes progressively weaker as the temperature increases as observed by $^{11}B$ NMR. This behavior results in the expansion of the cyclic boronic ester species, rendering the molecule more flexible and kinetically more reactive, which is in contrast to the rigid and thermodynamically stable boronic esters with a boron $sp^3$ hybridized upon the formation of the bond N->B. In fact, the increased reactivity at high temperature of these groups may lead to materials with improved processability compared to dioxaborolane-based vitrimers and CANs.

Therefore, we designed low-$T_g$ polymers bearing dioxazaborocane moieties that were further crosslinked with complementary dioxaborolanes to form linkages with N-B dative bonds. We compared these materials to their dioxaborolane analogues to investigate the differences in dynamicity at service and elevated processing temperatures. Before performing the crosslinking, we confirmed the exchange between dioxazaborocanes and dioxaborolanes by $^1H$ NMR spectroscopy, using model molecules. Then, we copolymerized by free-radical polymerization lauryl and 2-ethyl hexyl methacrylates with 3 different boronic ester methacrylates (2 dioxaborolanes and 1 dioxazaborocane) to obtain three different polymer precursors of networks of crosslinked polymers that were crosslinked in pairs by targeting the same crosslinking density (i.e., 50% of the functional groups). After corroborating the thermal stability of the networks of crosslinked polymers, mechanical and rheological tests in the linear regime were conducted which demonstrated that dioxazaborocanes linkages provide enhanced mechanical properties, relatively low viscosities at service temperature (30-80 °C), and super-fast stress relaxation at high temperature (100-180 °C) to the materials compared to their dioxaborolane-containing counterpart.

The present invention relates to a material under the form of a network of crosslinked polymer(s) comprising:

- at least one polymer P carrying pendant groups p1; and
- at least one compound C carrying groups p2,
  said pendant groups p1 each comprising a linking arm binding it to its polymer backbone and being terminated by a function constituting one exchange partner, and said groups p2 each comprising a function constituting the other exchange partner,

the at least one polymer P and the least one compound C reacting together through pendant groups p1 and groups p2 via exchange reaction resulting in crosslinking points, and the crosslinking points being able to get exchanged with another crosslinking point through an exchange reaction, and/or being able to be released through an exchange reaction with a non-polymer co-product of the exchange reaction,
one of the exchange partners is at least one from:

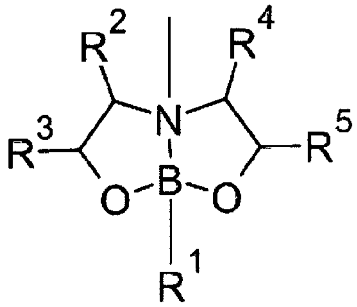

wherein:

- the nitrogen atom is linked to the linking arm in the case of the polymer P or to a hydrocarbon radical in the case of the compound C;
- $R^1$ is a hydrocarbon radical linked to the boron atom of the dioxazaborocane ring by a covalent bond through a carbon atom; and
- $R^2$ to $R^5$, identical or different, each represent hydrogen or a hydrocarbon radical, or $R^2$ and $R^3$ on one hand and $R^4$ and $R^5$ on the other hand form together an aliphatic or aromatic ring, and

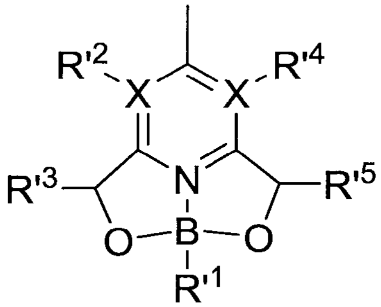

wherein:

- the carbon atom in para of the nitrogen atom of the heterocycle involved in the N,B dative bond is linked to the linking arm in the case of the polymer P or to a hydrocarbon radical in the case of the compound C;
- $R'^1$ is a hydrocarbon radical linked to the boron atom of the dioxazaborocane ring by a covalent bond through a carbon atom;
- X is N or C, and when X is N $R'^2$ and $R'^4$ being absent; and
- $R'^2$ and $R'^4$, when present, and $R'^3$ and $R'^5$, identical or different, each represent hydrogen or a hydrocarbon radical, or $R'^2$ and $R'^3$ on one hand and $R'^4$ and $R'^5$ on the other hand form together an aliphatic or aromatic ring,

and the other exchange partner is selected from:

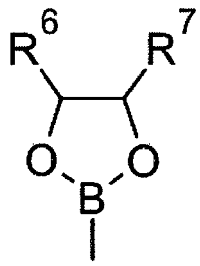

wherein:

- the boron atom is linked to the linking arm in the case of the polymer P or to a hydrocarbon radical in the case of the compound C; and
- $R^6$ to $R^7$, identical or different, each represent hydrogen or a hydrocarbon radical, or $R^6$ and $R^7$ form together

an aliphatic or aromatic ring;

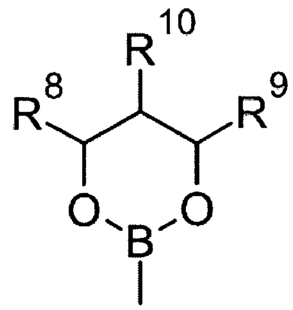

wherein:

- the boron atom is linked to the linking arm in the case of the polymer P or to a hydrocarbon radical in the case of the compound C; and
- $R^8$ to $R^{10}$, identical or different, each represent hydrogen or a hydrocarbon radical, or $R^8$ and $R^{10}$ on one hand and $R^9$ and $R^{10}$ on the other hand form together an aliphatic or aromatic ring;

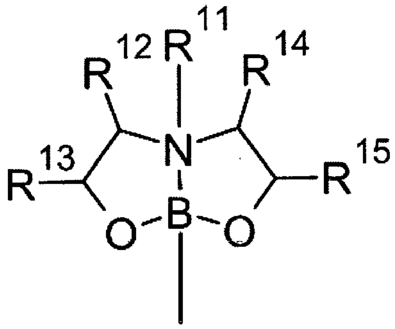

wherein:

- the boron atom is linked to the linking arm in the case of the polymer P or to a hydrocarbon radical in the case of the compound C;
- $R^{11}$ is H or a hydrocarbon radical linked to the nitrogen atom of the dioxazaborocane ring by a covalent bond through a carbon atom; and
- $R^{12}$ to $R^{15}$, identical or different, each represent hydrogen or a hydrocarbon radical, or $R^{12}$ and $R^{13}$ on one hand and $R^{14}$ and $R^{15}$ on the other hand form together an aliphatic or aromatic ring,

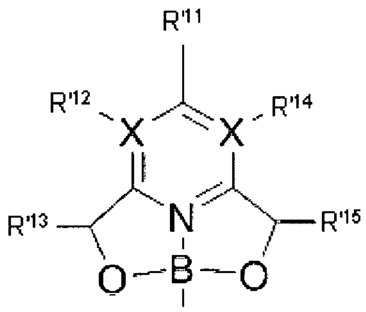

wherein:

- the boron atom is linked to the linking arm in the case of the polymer P or to a hydrocarbon radical in the case of the compound C;
- $R'^{11}$ is H or a hydrocarbon radical;
- X is N or C, and when X is N $R'^{12}$ and $R'^{14}$ being absent; and
- $R'^{12}$ and $R'^{14}$, when present, and $R'^{13}$ and $R'^{15}$, identical or different, each represent hydrogen or a

hydrocarbon radical.

In particular, $R^1$ and $R'^1$ are independently an aromatic or heteroaromatic radical.

In one particular embodiment, the compound C is a polymer, so-called second polymer P', groups p2 being pendant groups each comprising a linking arm binding it to its polymer backbone and being terminated by said function constituting one exchange partner.

The first and second polymers P and P' can be chosen from: polyolefins and their copolymers, especially polyethylene, polypropylene and their copolymers, polystyrene and its copolymers, poly(meth)acrylates and their copolymers, polydienes and their copolymers, especially polybutadiene, polyisoprene and their copolymers, polyesters and their copolymers, especially polyethylene terephthalate (PET), polybutylene terephthalate (PBT) and their copolymers.

The polymer backbone of at least one of the first polymer P and the second polymer P' can have further pendant groups different from pendant groups p1 and p2.

The first and second polymers P and P' can be poly(meth)acrylates and the linking arm of the pendant group p1 is of formula $-C(=O)O-(CH_2)_m-$, m being an integer from 1 to 4, and the linking arm of the group p2 is of formula $-C(=O)O-(CH_2)_q-OC(=O)$-Phenyl-, q being an integer from 1 to 4, the pendant groups p1 and p2 being linked to their polymer backbone through the carbonyl group.

The further pendant groups different from pendant groups p1 and p2 can be of formula $-C(=O)O-R^{16}$, $R^{16}$ representing linear or branched, $C_1$-$C_{12}$ alkyl such as dodecyl or 2-ethylhexyl.

In another particular embodiment, the compound C is chosen from:

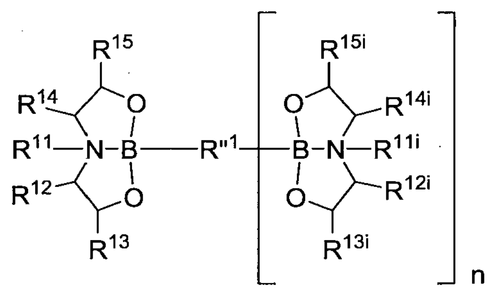

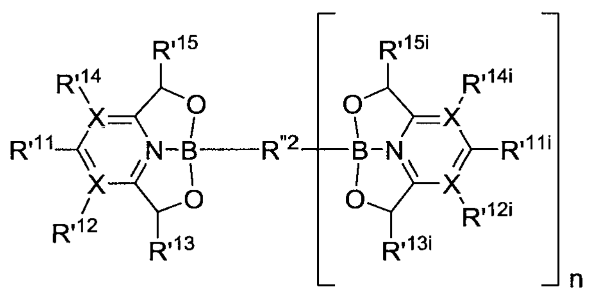

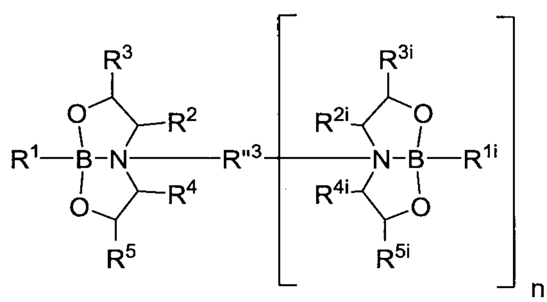

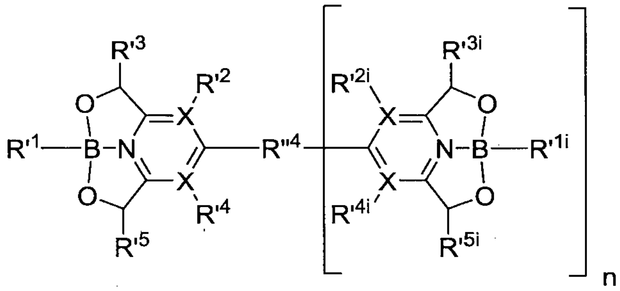

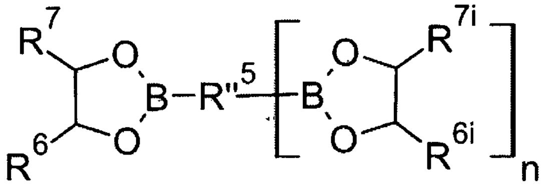

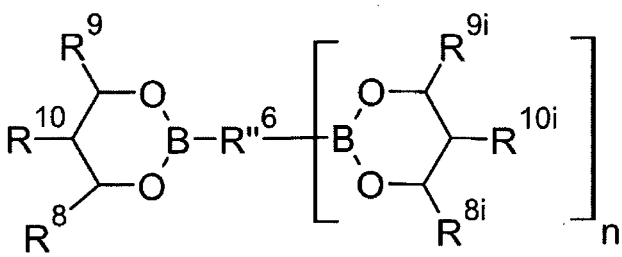

wherein:

- X, $R^1$ and $R^6$ to $R^{15}$ and $R'^1$ and $R'^{11}$ to $R'^{15}$ are as defined above;
- n is an integer comprised between 1 and 3;
- $R''^1$ to $R''^5$ are a hydrocarbon radical, to which are linked, each time by different carbon atoms, the n+1 boron containing cycles;
- $R^{1i}$ is a hydrocarbon radical linked to the boron atom of the dioxazaborocane ring by a covalent bond through a carbon atom; and
- $R^{2i}$ to $R^{5i}$, identical or different, each represent hydrogen or a hydrocarbon radical, or $R^{2i}$ and $R^{3i}$ on one hand and $R^{4i}$ and $R^{5i}$ on the other hand form together an aliphatic or aromatic ring,
- $R'^{1i}$ is a hydrocarbon radical linked to the boron atom of the dioxazaborocane ring by a covalent bond through a carbon atom;
- $R'^{2i}$ and $R'^{4i}$, when X is C, and $R'^{3i}$ and $R'^{5i}$, identical or different, each represent hydrogen or a hydrocarbon radical, or $R'^{2i}$ and $R'^{3i}$ on one hand and $R'^{4i}$ and $R'^{5i}$ on the other hand, when X is C, form together an aliphatic or aromatic ring;
- $R^{6i}$ to $R^{7i}$, identical or different, each represent hydrogen or a hydrocarbon radical, or $R^{6i}$ and $R^{7i}$ form together an aliphatic or aromatic ring;
- $R^{8i}$ to $R^{10i}$, identical or different, each represent hydrogen or a hydrocarbon radical, or $R^{8i}$ and $R^{10i}$ on one hand and $R^{9i}$ and $R^{10i}$ on the other hand form together an aliphatic or aromatic ring;
- $R^{11i}$ is H or a hydrocarbon radical linked to the nitrogen atom of the dioxazaborocane ring by a covalent bond through a carbon atom;
- $R^{12i}$ to $R^{15i}$, identical or different, each represent hydrogen or a hydrocarbon radical, or $R^{12i}$ and $R^{13i}$ on one hand and $R^{14i}$ and $R^{15i}$ on the other hand form together an aliphatic or aromatic ring;
- $R'^{11i}$ is H or a hydrocarbon radical; and
- $R'^{12i}$ and $R'^{14i}$, when X is C, and $R'^{13i}$ and $R'^{15i}$, identical or different, each represent hydrogen or a hydrocarbon radical.

The material can further comprise at least one compound arising from the crosslinking exchange reaction, of formula:

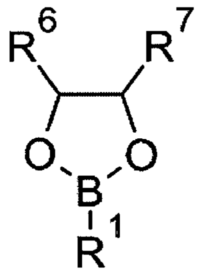

and/or

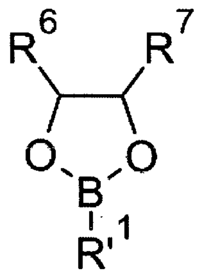

and /or

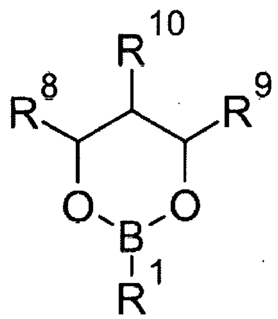

and/or

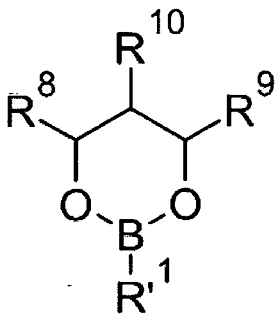

and /or

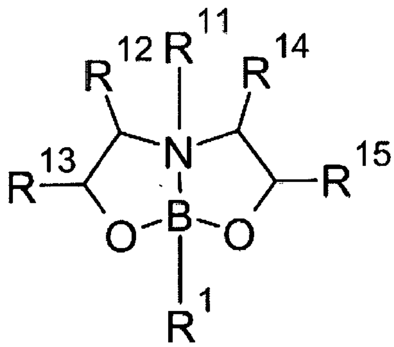

,and/or

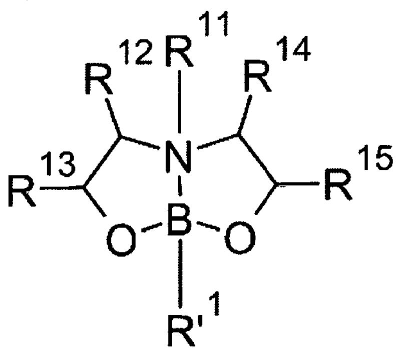

and /or

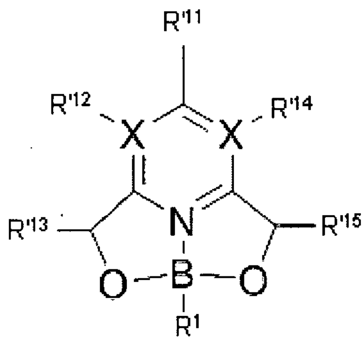

and /or

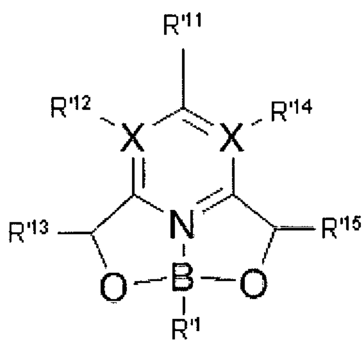

X, $R^1$ and $R^6$ to $R^{15}$ and $R'^1$ and $R'^{11}$ to $R'^{15}$ being as defined above.

In a particular embodiment:

- $R^1$ is phenyl; and/or

- at least one from $R^6$ and $R^7$ is methyl, the other being hydrogen; and/or
- $R^2$ to $R^5$ and $R^8$ to $R^{15}$ are each hydrogen; and/or
- $R^{11}$ is hydrogen, methyl or ethyl; and
- $R'^1$ is phenyl; and/or
- $R'^{12}$ to $R'^{15}$ are each hydrogen; and/or
- $R'^{11}$ is hydrogen, methyl or ethyl.

The material according to the invention can further comprise a solvent chosen from: mineral, natural or silicone oils, hydrocarbon solvents, water, alcohols, polyethers, fatty esters.

The material according to the invention can further comprise at least one polymer chosen from polyolefins and their copolymers, especially polyethylene, polypropylene and their copolymers, polystyrene and its copolymers, poly(meth)acrylates and their copolymers, polydienes and their copolymers, especially polybutadiene, polyisoprene and their copolymers, polyesters and their copolymers, especially PET, PBT and their copolymers, polyvinyl chloride and its copolymers, polyurethanes and their copolymers, polysiloxanes and their copolymers, especially polydimethylsiloxane and its copolymers.

In a particular embodiment, a part of the groups p1 and p2 can remain unreacted in the material and is still able to undergo an exchange reaction within the material.

The material according to the invention can present an insoluble weight fraction greater than 0.1%, preferably greater than 0.5%, 1%, 2%, 5%, 10%, 20%, 30%, 40%, 50% and 70%, after 48 hours of immersion at a weight fraction of 1/10 in a good non-reactive solvent at atmospheric pressure and at a temperature between the melting temperature and the boiling temperature of said good non-reactive solvent.

A good non-reactive solvent can be a good solvent that will not degrade the polymer chains, ' that will not degrade or react with, notably by transesterification reactions, the functions constituting the exchange partners and that will not participate in the exchange reactions. The insolubility can be assessed by the naked eye or by passing the formulation through a filter with a porosity of 0.2 micrometer, preferably of 0.4 micrometer, still more preferably of 1 micrometer.

The invention also relates to a method for the preparation of a material according to the invention, characterized in that the first polymer P and the second compound C are mixed together.

In a particular embodiment, the mixing is conducted in a solvent chosen from: ethyl acetate, butyl acetate, acetone, acetonitrile, benzyl alcohol, acetic anhydride, anisole, benzene, butanol, butanone, chlorobenzene, chloroform, cyclohexane, dichloroethane, dichloromethane, dimethylformamide, dimethylsulfoxide, dioxane, water, ethanol, glycol ether, diethyl ether, ethylene glycol, heptane, hexane, mineral oils, natural oils, synthetic oils, hydrocarbons, methanol, pentane, propanol, propoxypropane, tetrachloroethane, tétrachlorométhane, tetrahydrofuran, toluene, trichlorobenzene, xylene, and their mixtures

The invention also relates to a recycling method of a material according to the invention in a spent state, characterized in that it comprises the steps of:

- cutting and shredding the materials in a spent state into pieces with a diameter of 1 $\mu$m to 1 cm, preferably 10 $\mu$m to 5 mm, even more preferably of 100 $\mu$m to 2 mm;
- shaping the material by compression molding, injection molding or extrusion in order to obtain a new material.

The recycling can further comprise washing and drying steps before the cutting and shredding step.

The following Examples illustrate the present invention without, however, limiting its scope.

**Materials**

3,5-Dimethylphenylboronic acid (95%), triethanolamine (99%), triethylamine (TEA, 98%), cis-cyclohexane-1,2-diol (99%), propane-1,2-diol (99.5%), methacrylic anhydride (>94%), lauryl methacrylate (LMA, 96%), 4-(dimethylamino) pyridine (DMAP, 99%), oxalyl chloride (98%), p-toluenesulfonic acid monohydrate (pTSA, 98.5%), magnesium sulfate ($MgSO_4$, >99.5%), aluminum oxide activated basic Brockmann I, and 2,2-azobis(2-methylpropionitrile) (AIBN) were purchased from Sigma-Aldrich.

N-butyldiethanolamine (98%), 1,2,6-hexanetriol (96%), and 2-ethylhexyl methacrylate (EHMA, 99%) were purchased from TCI-Europe.

Sodium bicarbonate ($NaHCO_3$, >99.7%), sodium sulfate ($Na_2SO_4$>99%), sodium hydroxide (NaOH, >98%), and anisole (99%) were purchased from Alfa Aesar.

Phenylboronic acid (98%) was purchased from Combi-Blocks.

Hydrochloric acid (HCl, 98%) was purchased from Merck Millipore.

Solvents were purchased from Carlo Erba.

AIBN was recrystallized from methanol before being used.

All other reagents and chemicals were used without further purification.

**Characterization**

**Nuclear magnetic resonance (NMR) spectroscopy.**

$^{1}H$ and $^{13}C$ NMR spectra were recorded at 23 °C on a Bruker AVANCE 400 spectrometer at 400 and 100 MHz, respectively. The references used for $^{1}H$ and $^{13}C$ NMR spectra were the residual solvent peaks ($^{1}H$ NMR: $\delta$ 7.26 in $CDCl_3$ 2.5 in DMSO-$d_6$, and $^{13}C$ NMR: $\delta$ 77.16 in $CDCl_3$ and 39.52 in DMSO-$d_6$).

**Size exclusion chromatography (SEC).**

Molecular weights of polymers were estimated based on conventional calibration with monodisperse PMMA standards on a Viscotek GPCmax/VE2001 connected to a refractive index detector from Malvern by using THF as solvent.

**Gas chromatography-mass spectrometry (GC-MS).**

Samples were dissolved in acetronitrile at a concentration of 1 mg/mL and further analyzed with electron impact (EI) using a Shimadzu GCMS-QP 2010s (70 eV).

**Electrospray ionization-mass spectrometry (ESI-MS)** .

Samples were dissolved in acetonitrile at a concentration of 1 $\mu$g/mL and further analyzed on an ESI-LTQ Orbitrap XL FTMS (Thermo Fischer Scientific). Full scans were performed in the range of 150 and 2000 m/z in positive polarity mode.

**Shaping.**

Samples were compression molded at 180 °C on a hot press at different conditions depending on the nature of the network. Networks of crosslinked polymers containing dioxazaborocane moieties were compression molded for 10 min under 1 Ton, whereas those made up of only dioxaborolanes were shaped for 30 min under 3 Tons.

**Dynamic mechanical analysis (DMA).**

Samples (rectangular bars of 1.4 mm$\times$5 mm$\times$35 mm) were analyzed on a TA Instruments Q800 analyzer in tensile mode with a heating rate of 3 °C/min from -100 to 200 °C, a maximum strain amplitude of 1%, and a fixed frequency of 1 Hz.

**Tensile testing.**

Tensile stress-strain experiments of dog-bone-shaped samples (ASTM D412-D) were carried out on an Instron 5564 universal testing system equipped with a 100 N cell force at a crosshead speed of 10 mm/min. Six specimens of each sample were tested. Young's modulus was estimated from the slope of the line between strain values of below 3%.

**Rheological characterizations.**

Experiments were conducted on Anton Paar MCR 501 rotational rheometer with a parallel plate geometry (25 mm diameter) in a convection oven under a constant nitrogen flow of 100 L/h.

**Stress relaxation.**

Samples were heated up to 180 °C at a constant rate of 10 °C/min. The temperature was then stabilized for 30 min at a $F_N$ of 0.25 N maintained constant throughout the experiment. Subsequently, the system was cooled at -1 °C/min to 100 °C and the temperature was stabilized for 30 min before being raised again at the same rate to 180 °C. Prior to conducting the experiments the temperature was maintained for 30 min. The stress relaxation tests were performed at 1% of oscillatory deformation for at least 1.5 h at each temperature. Between each measurement, the system was first cooled down at -1 °C/min to the desired temperature and this was stabilized for 30 min more.

**Confirmation of the exchange reaction between dioxazaborocanes and dioxaborolanes.**

For making the networks of crosslinked polymers with different boronic ester functionalities from complementary polymers, the crosslinking has to occur upon the reaction between a dioxaborolane and a dioxazaborocane. Model boronic esters with distinct phenyl rings ($D^1B^2$, $A^1B^1$, $D^1B^1$, $A^1B^2$) were synthesized by condensation reactions between phenyl boronic acids and 1,2-diols or aminodiols as depicted in Figure 1.

The protocols for the synthesis of dioxazaborocanes was modified and simplified from literature to avoid the use of column chromatography [1, 2]. Likewise, the synthesis of dioxaborolanes was adapted from literature [3].

**Dioxazaborocanes: $A^1B^1$ and $A^1B^2$**

N-butyl diethanolamine (1.01 equiv.) was first dissolved in methanol (v/v = 1:1) in a small flask. The boronic acid (1 equiv.) and methanol (1 mL) were mixed in a large excess of diethyl ether (6 mL per mmol of boronic acid) until complete homogenization. Then, the solution of N-butyl diethanolamine was added and the mixture was heated at 45°C under reflux and stirred vigorously for 1 h. The resulting solid was filtered and dried to yield the dioxazaborocanes as white powders (yield = 70-82%).

*6-Butyl-2-phenyl-1,3,6,2-dioxazaborocane* ($A^1B^1$)

**$^1$H NMR** (400 MHz, $CDCl_3$) δ 7.61 (m, 2H), 7.27 (m, 3H), 4.16 (m, 4H), 3.02 (m, 4H), 2.30 (m, 2H), 1.48 (tt, J = 11.9, 6.3 Hz, 2H), 1.11 (h, J = 7.4 Hz, 2H), 0.81 (t, J = 7.3 Hz, 3H).

**$^{13}$C NMR** (100 MHz, $CDCl_3$) δ 133.44, 127.63, 127.38, 63.19, 59.78, 57.45, 27.10, 20.32, 13.88.

*6-Butyl-2-(3,5-dimethylphenyl)-1,3,6,2-dioxazaborocane* ($A^1B^2$)

**$^1$H NMR** (400 MHz, $CDCl_3$) δ 7.22 (m, 2H), 6.89 (m, 1H), 4.16 (m, 4H), 3.03 (m, 4H), 2.35 (m, 2H), 2.29 (dd, J = 0.8 Hz, 6H), 1.50 (m, 2H), 1.14 (h, J = 7.4 Hz, 2H), 0.83 (t, J = 7.4 Hz, 3H).

**$^{13}$C NMR** (100 MHz, $CDCl_3$) δ 136.35, 131.25, 129.30, 63.19, 59.71, 57.45, 27.22, 21.59, 20.38, 13.97.

**Dioxaborolane: $D^1B^2$**

*2-(3,5-Dimethylphenyl)-4-methyl-1,3,2-dioxaborolane* ($D^1B^2$)

Propane-1,2-diol (1 equiv.) and 3,5-dimethylphenylboronic acid (1.01 eq.) were mixed in THF (2 mL/mmol) at room temperature until complete dissolution of all the components. Then, $MgSO_4$ (3 equiv.) was added stepwise and the mixture was stirred overnight. Thereafter, the suspension was filtered and the solvent was evaporated under reduced pressure to yield a pasty-like solid. The crude product was immersed in a mixture of heptane and petroleum ether (v/v = 1:1) for 1 h. Subsequently, the impurities were filtered and the solvent evaporated. The purification was repeated 2 times more to obtain the product as a colorless oil (yield = 44%).

**$^1$H NMR** (400 MHz, $CDCl_3$) δ 7.44 (m, 2H), 7.12 (m, 1H), 4.72 (m, 1H), 4.45 (dd, J = 8.9, 7.7 Hz, 1H), 3.89 (dd, J = 8.8, 7.2 Hz, 1H), 2.33 (dd, J = 0.8 Hz, 6H), 1.42 (d, J = 6.3 Hz, 3H).

**GC-MS (m/z):** [M] calculated for $C_{11}H_{15}BO_2$ = 190.12, found = 190.1.

**Model exchange reactions**

The model boronic esters $D^1B^2$ and $A^1B^1$ were mixed in deuterated chloroform ($CDCl_3$) at different molar ratios ranging from 0.25 to 1 at room temperature (about 23 °C) for 1 day. The presence of the characteristic peaks of the reactants and the products observed in the $^1$H NMR spectra (see Figure 2) revealed the presence of a statistical mixture of dioxazaborocane and dioxaborolane. Even though in the timescale of the experiment we cannot ensure that the reactions achieved the thermodynamic equilibrium, we corroborated that the exchange between these boronic esters can take place even at low temperatures.

To estimate the conversion, we use the equation below:

$$\chi(\%) = \frac{[A^1B^1]_0 - [D^1B^1]}{[A^1B^1]_0} = 1 - \frac{[D^1B^1]}{[A^1B^1]_0} \qquad \text{Eq. 1}$$

But, since the number of non-substituted phenyl rings remains constant throughout the reaction, the initial concentration of $A^1B^1$ can be expressed as the concentration of $A^1B^1$ plus $D^1B^1$.

$$\chi(\%) = \frac{[D^1B^1]}{[A^1B^1]+[D^1B^1]} = \frac{I_{7.81}}{I_{7.60}+I_{7.81}} \qquad \text{Eq. 2}$$

Where $I_{7.60}$ and $I_{7.81}$ correspond to the integration of 1 proton of $A^1B^1$ and $D^1B^1$, respectively. Thus, after 24 h of reaction, the final composition of the boronic esters is listed in Table 1.

Table 1. Molar composition of dioxazaborocanes and dioxaborolanes after exchange.

| Entry | Initial ratio (t = 0) | | Molar fraction (t = 24 h) | | | | $\chi$ (%) |
|---|---|---|---|---|---|---|---|
| | **$D^1B^2$** | **$A^1B^1$** | **$D^1B^2$** | **$A^1B^1$** | **$D^1B^2$** | **$A^1B^1$** | |
| 1 | 1 | 1 | 0.26 | 0.30 | 0.21 | 0.23 | 41 |
| 2 | 1 | 0.5 | 0.46 | 0.15 | 0.19 | 0.20 | 56 |
| 3 | 1 | 0.25 | 0.65 | 0.06 | 0.14 | 0.15 | 69 |
| 4 | 0.5 | 1 | 0.14 | 0.48 | 0.19 | 0.19 | 28 |
| 5 | 0.25 | 1 | 0.06 | 0.67 | 0.14 | 0.14 | 17 |

**Preparatory Example 1** : **Synthesis of the diol methacrylate monomer DM**

The synthesis of the diol methacrylate DM was achieved in 3 steps by adapting the protocol reported by Nicolaÿ, Leibler and co-workers [4] and as depicted in the following synthetic pathway:

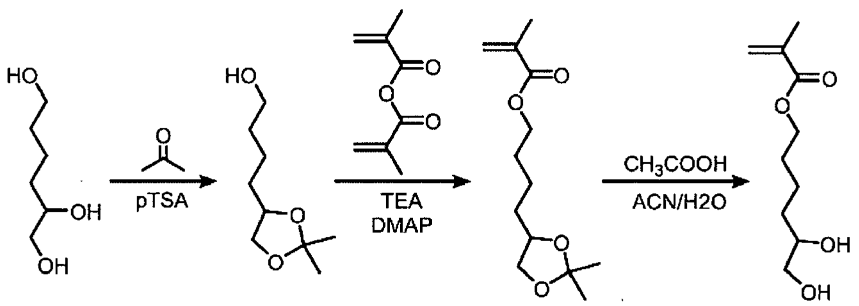


**HTP** 89 %

**DMP** 52 %

**DM** 62 %

**Step 1: 4-(2,2-dimethyl-1,3-dioxolan-4-yl)butan-1-ol (HTP).**

Hexan-1,2,6-triol (20 g, 1 equiv.) was dissolved in acetone (425 mL, about 40 equiv.) in presence of $MgSO_4$ (34.79 g, 2 equiv.). Then p-toluene sulfonic acid (pTSA, 2.21 g, 0.08 equiv.) was slowly added and the mixture was stirred for 24 h at room temperature. Thereafter, $NaHCO_3$, (1.94 g, 0.16 equiv.) was then added and the mixture was stirred for 3 h more. The salts were filtered off and the solution was concentrated under reduced pressure to yield a white slurry. Then, water (250 mL) was added and the product was extracted with dichloromethane (DCM, 5×200 mL). The organic phase was dried over $MgSO_4$ and concentrated under reduced pressure to obtain the protected diol as a slightly yellow liquid (22.36 g, yield = 89 %).

**$^1$H NMR** (400 MHz, $CDCl_3$) δ 4.05 (m, 2H), 3.64 (t, J = 6.5 Hz, 2H), 3.50 (s, 1H), 1.58 (m, 6H), 1.39 (d, J = 0.9 Hz, 3H), 1.34 (s, 3H).

**Step 2: 4-(2,2-dimethyl-1,3-dioxolan-4-yl)butyl methacrylate (DMP).**

HTP (6.00 g, 1 equiv.), triethylamine (TEA, 4.22 g, 1.2 equiv.), 4-dimethylaminopyridine (DMAP, 40 mg, 0.01 equiv.) were mixed in a round-bottom flask and methacrylic anhydride (6.78 g, 1.2 equiv.) was added stepwise to the mixture and stirred for 24 h at room temperature. Then, 5 mL of methanol were added and the reaction mixture was stirred for 3 h more. Thereafter, heptane (50 mL) and water (50 mL) were added, the aqueous phase was discarded and the

organic phase was washed with 0.5 M HCl (3×50 mL), 0.5 M NaOH (3×50 mL), and water (50 mL). Subsequently, the organic phase was dried over $MgSO_4$, filtered and concentrated under reduced pressure to yield an oil that was dissolved in DCM and passed through a column of activated basic $Al_2O_3$. The solvent was removed under \ reduced pressure and the product was obtained as a slightly yellow oil (4.09 g, yield = 52 %).

**$^1$H NMR** (400 MHz, $CDCl_3$) δ 6.09 (m, 1H), 5.55 (m, 1H), 4.08 (m, 4H), 3.51 (t, J = 7.2 Hz, 1H), 1.94 (dd, J = 1.6, 1.0 Hz, 3H), 1.62 (m, 6H), 1.40 (s, 3H), 1.35 (s, 3H).

**Step 3: 5,6-dihydroxyhexyl methacrylate (DM).**

DMP (4.09 g, 1 equiv.) and acetic acid (2.50 g, 2.3 equiv.) were dissolved in 60 ml of a mixture acetonitrile/water (1:1) at 30 °C for 48 h, an air flow was used to remove the acetone released. The product was extracted with ethyl acetate (5×50 mL), and the organic phase was washed with 0.5 M NaOH (5×30 mL), and water (3×30 mL). The solution was dried over $MgSO_4$ and concentrated under reduced pressure to yield the monomer as a slightly yellow oil (2.25 g, yield = 62 %).

**$^1$H NMR** (400 MHz, $CDCl_3$) δ 6.08 (m, 1H), 5.54 (m, 1H), 4.14 (t, J = 6.6 Hz, 2H), 3.66 (m, 2H), 3.42 (dd, J = 11.1, 7.6 Hz, 1H), 2.72 (m, 2H), 1.92 (t, J = 1.3 Hz, 3H), 1.70 (m, 2H), 1.45 (m, 4H).

<u>**Preparatory Example 2**</u> : <u>**Synthesis of the dioxaborolane methacrylate monomer DBM**</u>

The synthesis of the dioxaborolane methacrylate monomer BDM was achieved in 4 steps as depicted in the following synthetic pathway:

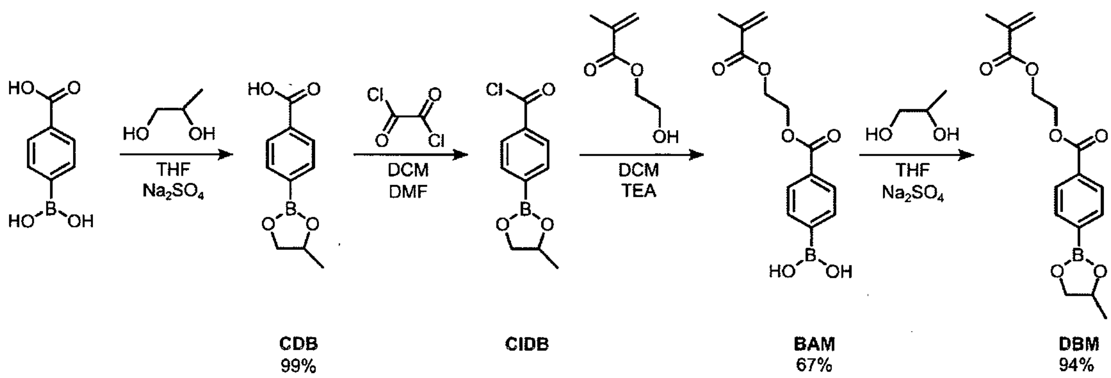


**Step 1: 4-(4-methyl-1,3,2-dioxaborolan-2-yl)benzoic acid (CDB).**

In a round-bottomed flask, 4-carboxyphenyl boronic acid (5 g, 1 equiv.) and propane-1,2-diol (2.27 g, 1 equiv.) were mixed in 50 mL of THF at room temperature. Then, $Na_2SO_4$ (8.65 g, 3 equiv.) were added stepwise and the mixture was stirred overnight. The salt was filtered off, and the solution was concentrated under reduced pressure to yield the product as a white solid (6.14 g, yield = 99 %).

**$^1$H NMR** (400 MHz, $CDCl_3$) δ 8.11 (m, 2H), 7.92 (m, 2H), 4.77 (tq, J = 13.8, 6.3 Hz, 1H), 4.49 (dd, J = 8.9, 7.7 Hz, 1H), 3.93 (dd, J = 8.9, 7.3 Hz, 1H), 1.44 (d, J = 6.2 Hz, 3H).

**$^{13}$C NMR** (101 MHz, $CDCl_3$) δ 171.37, 134.96, 131.65, 129.43, 74.25, 72.88, 21.92.

**Step 2: 4-(4-methyl-1,3,2-dioxaborolan-2-yl) benzoyl chloride (ClDB).**

CDB (6.14 g, 1 equiv.) was dissolved in 150 mL of DCM in presence of dimethylformamide (DMF, 0.2 mL) in an oven dried 250 mL round-bottom flask and purged with nitrogen for 10 min. While the mixture is under $N_2$ atmosphere, oxalyl chloride (6.33 mL, 2 equiv.) was added dropwise. Later, 2 h after the reaction mixture stopped bubbling, the solvent and the remaining oxalyl chloride were removed under reduced pressure. The product plus the residual impurities were obtained as 7.12 g of yellow crystals. This product was used without any further purification.

**$^1$H NMR (400 MHz, $CDCl_3$)** δ 8.11 (m, 2H), 7.93 (m, 2H), 4.77 (tq, J = 7.6, 6.2 Hz, 1H), 4.50 (dd, J = 8.9, 7.8 Hz, 1H), 3.93 (dd, J = 7.3, 4.0 Hz, 1H), 1.44 (m, 3H).

**$^{13}$C NMR (101 MHz, $CDCl_3$)** δ 168.78, 135.31, 134.95, 130.52, 129.40, 74.42, 72.97, 21.89.

**Step 3: (4-((2-(methacryloyloxy)ethoxy)carbonyl)phenyl) boronic acid (BAM).**

Crude ClDB (7.12 g, 1 equiv.) was dissolved in 20 mL of DCM and under nitrogen atmosphere. In a three-neck round-bottom flask, 2-hydroxyethyl methacrylate (4.7 g, 1.2 equiv.) and triethylamine (3.89 g, 1.2 equiv.) were mixed in 100 mL of DCM and placed in an ice bath. Subsequently, ClDB solution was added dropwise under nitrogen. After 18 h of reaction, the solution was filtered and the DCM was removed under reduced pressure. Then, the crude new product was dissolved in 100 mL of ethyl acetate and washed with 0.5 M of HCl (3×50 mL), brine (1×50 mL), and water (1×50 mL) . The organic phase was dried over $Na_2SO_4$, filtered and the solvent removed under reduced pressure to yield a slightly yellow oil. Thereafter, 25 mL of water were added to solubilize the reactants in excess and the solution was stirred for 10 min. The solids were filtered and dissolved again in a large excess of ethyl acetate before adding $Na_2SO_4$ to remove the traces of water. The mixture was filtered and the solvent removed in a rotary evaporator to yield the product as white crystals (5.44 g, yield = 62% with respect to the first step).

**$^1$H NMR** (400 MHz, DMSO-$d_6$)δ 8.32 (s, 2H), 7.91 (s, 4H), 6.03 (s, 1H), 5.68 (s, 1H), 4.53 (m, 2H), 4.45 (m, 2H), 1.86 (dd, J = 1.6, 1.0 Hz, 3H).

**$^{13}$C NMR** (101 MHz, DMSO-$d_6$)δ 166.52, 165.84, 135.70, 134.33, 130.68, 128.06, 126.19, 62.68, 62.44, 18.00.

**Step 4: 2-(methacryloyloxy)ethyl 4-(4-methyl-1,3,2-dioxaborolan-2-yl)benzoate (DBM).**

In a round-bottom flask, BAM (5.44 g, 1 equiv.) and propane-1,2-diol (1.5 g, 1 eq.) were mixed in 50 mL of THF. The water product of the reaction was removed by adding $Na_2SO_4$ (8.42 g, 3 equiv.) stepwise and the mixture was stirred overnight. The solids were then filtered off and the solvent evaporated under reduced pressure. The crude product was dissolved in a large excess of heptane and-stirred for 2 h. The impurities were filtered and the solvent was removed in a rotary evaporator to yield the product as slightly yellow oil that crystallizes as a white solid at room temperature (5.86 g, yield = 94 %).

**$^1$H NMR** (400 MHz, $CDCl_3$) δ 8.02 (m, 2H), 7.87 (m, 2H), 6.13 (m, 1H), 5.58 (m, 1H), 4.73 (m, 1H), 4.52 (m, 5H), 3.90 (dd, J = 9.0, 7.3 Hz, 1H), 1.94 (dd, J = 5.3, 1.3 Hz, 3H), 1.41 (d, J = 6.3 Hz, 3H).

**$^{13}$C NMR** (101 MHz, $CDCl_3$)·δ 167.30, 166.45, 136.05, 134.89, 132.27, 128.93, 126.27, 74.20, 72.85, 62.87, 62.50, 21.90, 18.41.

**Preparatory Example 3** : **Synthesis of the dioxazaborocane methacrylate DZM**

The synthesis of the dioxazaborocane methacrylate DZM was achieved in 2 steps as depicted in the following synthetic pathway:

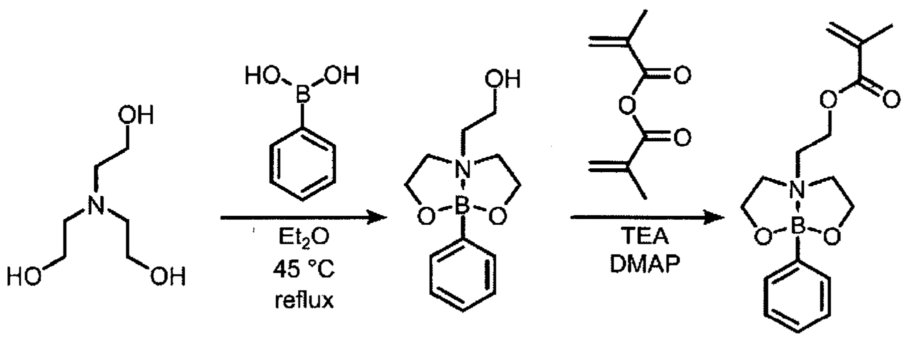


**DZA**
93%

**DZM**
71 %

**Step 1: 2-(2-phenyl-1,3,6,2-dioxazaborocan-6-yl)ethan-1-ol (DZA).**

Triethanolamine (5 g, 1.05 equiv.) and benzene boronic acid (4.01 g, 1 eq.) were mixed in a 250 mL round-bottomed flask with 160 mL (5 ml/mmol) of diethyl ether at 45 °C under reflux. After 1 h of reaction, the mixture was cooled down at room temperature, the solids were filtered off and dried under the fumehood for 2 h to obtain the product as a white solid (7.2 g, yield = 93%).

**$^1$H NMR** (400 MHz, DMSO-$d_6$) δ 7.47 (dd, J = 7.6, 1.8 Hz, 2H), 7.19 (m, 3H), 4.74 (t, J = 5.1 Hz, 1H), 3.91 (m, 4H), 3.57 (dt, J = 5.7, 5.7 Hz, 2H), 3.14 (m, 4H), 2.26 (t, J = 5.9 Hz, 2H).

**$^{13}$C NMR** (101 MHz, DMSO-$d_6$) δ 133.21, 126.91, 126.81, 62.67, 60.89, 57.05, 56.98.

**Step 2: Synthesis of 2-(2-phenyl-1,3,6,2-dioxazaborocan-6-yl)ethyl methacrylate (DBM).**

DBZ (5 g, 1 equiv.) was mixed with methacrylic anhydride (4.19 g, 1.2 equiv.), triethylamine (3 mL, 1 equiv.), and 4-(dimethylamino)pyridine (26 mg, 0.01 equiv.) in 50 mL of acetonitrile at room temperature for 16 h. Subsequently, 5 mL of methanol were added and the reaction was stirred for 3 h more. The solids were filtered off and the solution concentrated under reduced pressure. The crude product was immersed in 50 mL of a saturated solution of $NaHCO_3$ and extracted with ethyl acetate (3×50 mL). The organic phase was dried over $Na_2SO_4$, filtered, and concentrated under reduced pressure. The solids were suspended in a large excess of diethyl ether and stirred for 15 min at room temperature. The product was filtered and dried under the fumehood for 2 h to obtain DZM as a white solid (4.6 g, yield = 71%).

**$^1$H NMR** (400 MHz, $CDCl_3$) δ 7.62 (m, 2H), 7.29 (m, 3H), 6.06 (m, 1H), 5.62 (m, 1H), 4.31 (t, J = 1.1 Hz, 2H), 4.17 (m, 4H), 3.12 (t, J = 1.0 Hz, 4H), 2.67 (m, 2H), 1.92 (dd, J = 1.6, 0.8 Hz, 3H).

**$^{13}$C NMR** (101 MHz, $CDCl_3$) δ 166.78, 135.60, 133.45, 128.03, 127.65, 126.86, 63.56, 60.44, 58.09, 57.81, 18.39.

**ESI-MS:** *m/z* calculated for $[C_{16}H_{22}BNO_4H]^+$ ($[M-H]^+$) = 304.1715, found = 304.1715.

__Preparatory Example 4__ : __Synthesis of the four polymers $P^D$, $P^A$, $P^B$ and $P^{B*}$ (polymer precursors of networks of crosslinked polymers)__

To obtain a low-$T_g$ polymer, EHMA and LMA were first passed through a column of basic aluminum oxide to remove the inhibitors, then copolymerized with different boronic esters methacrylates via free-radical polymerization by using AIBN as initiator (solution in DMF at 10 mg/mL) and the solvent in a ratio of 1:1 (v/v). Three polymers were synthesized as following and their respective $M_n$ were determined through SEC by using narrow PMMA standards.

**Synthesis of $P^D$**

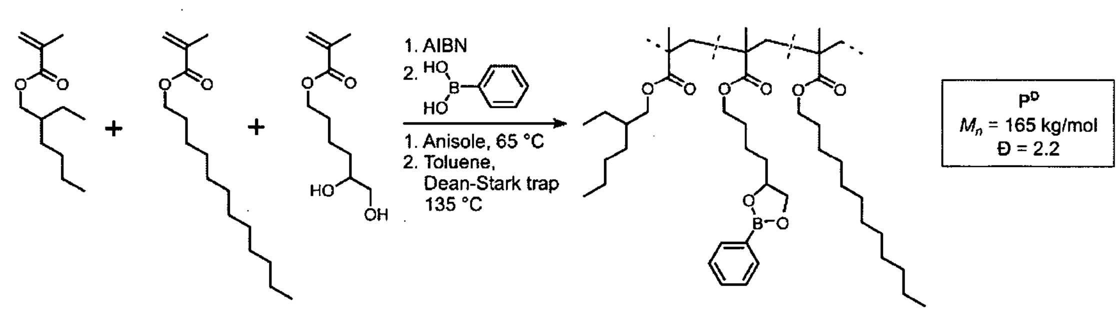


EHMA (8.6 g), LMA (15.9 g), and DM (438 mg) were mixed in anisole and purged with nitrogen for 30 min. Thereafter, 8.9 mL of the stock solution of AIBN were added and the mixture was heated up to 65 °C for 3 h (conversion = 70%). The polymer was precipitated in a large excess of methanol and dried under vacuum at 125 °C overnight to yield 17.8 g of the polymethacrylate. Subsequently, the polymer and phenyl boronic acid (375 mg) were dissolved in toluene (6 g of polymer/mL of solvent) and heated at 135 °C overnight under reflux with a Dean-Stark trap. The polymer was then precipitated in acetonitrile and dried at 125 °C overnight to yield 16.9 g of $P^D$ (2 mol% of dioxaborolanes).

**Synthesis of $P^A$**

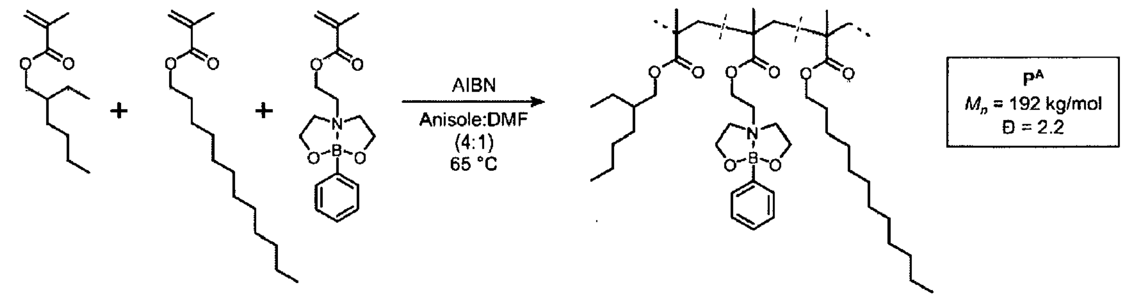


EHMA (17.1 g), LMA (31.7 g), and DZM (1.3 g) were mixed in a mixture of anisole:DMF (v/v = 4:1) and purged with nitrogen for 30 min. Then, 17.6 mL of the stock solution of AIBN were added and the mixture was stirred under nitrogen flow for 5 min more. Thereafter, the mixture was heated up to 65 °C and stirred for 3.25 h (conversion = 72%). The polymer was precipitated in a large excess of acetonitrile and dried under vacuum at 125 °C overnight to yield 46.3 g of polymer (1.9 mol% of dioxazaborocanes).

**Synthesis of $P^B$**

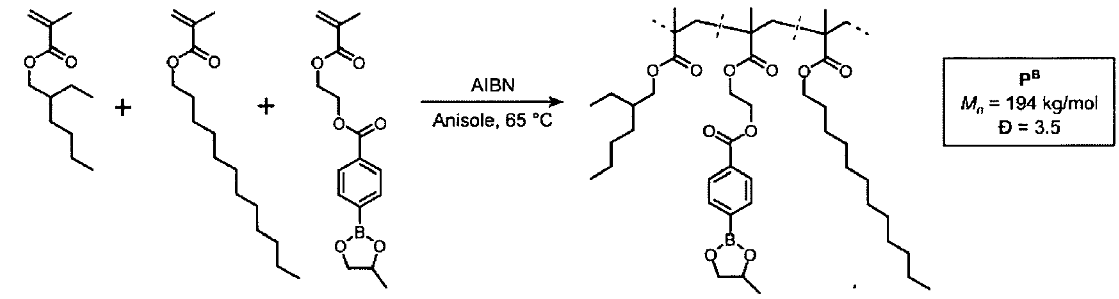


EHMA (18.7 g), LMA (34.8 g), and DBM (1.5 g) were mixed in anisole and purged with nitrogen for 30 min. Subsequently, 19.36 mL of the stock solution of AIBN were added and the mixture was heated up to 65 °C for 3 h (conversion = 69%). The polymer was precipitated in a large excess of ACN and dried under vacuum at 125 °C overnight to obtain 44.7 g of the polymer (1.7 mol% of dioxaborolanes).

**Synthesis of $P^{B*}$**

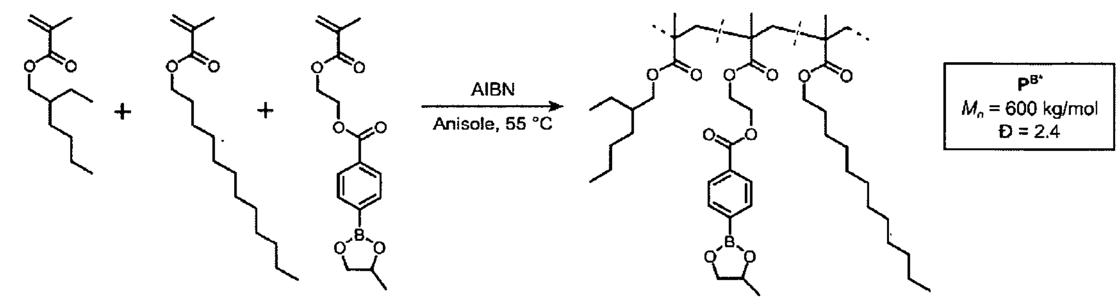


EHMA (4.33 g), LMA (5.61 g), and DBM (70.1 mg) were mixed in anisole and purged with nitrogen for 30 min. Subsequently, 723 μL of the stock solution of AIBN were added and the mixture was heated up to 55 °C for 18 h (conversion = 78%). The polymer was precipitated in a large excess of acetonitrile two times and dried under vacuum at 125 °C

overnight to obtain 7.81 g of the polymer (0.4 mol% of dioxaborolanes).

The composition of the polymers $P^D$, $P^A$, $P^B$, $P^{B*}$ was estimated from the integration of the peaks in the $^1$H NMR spectra of the three polymers (Figure 3) and the results are summarized in Tables 2.

Table 2. Monomer composition of the polymer precursors used to prepare networks of crosslinked polymers.

| Entry | Monomer | Composition (mol%) | | | |
|---|---|---|---|---|---|
| | | $P^D$ | $P^A$ | $P^B$ | $P^{B*}$ |
| 1 | LMA | 58.6 | 58.8 | 57.4 | 51.9 |
| 2 | EHMA | 39.4 | 39.3 | 40.9 | 47.7 |
| 3 | Boronic ester | 2.0 | 1.9 | 1.7 | 0.4 |

Table 3. Size exclusion chromatography results for the polymer precursors used to prepare networks of crosslinked polymers .

| **Entry:** | **Polymer** | **$M_n$ (kg/mol)** | **Đ** |
|---|---|---|---|
| 1 | **$P^D$** | 165 | 2.2 |
| 2 | **$P^A$** | 192 | 2.2 |
| 3 | **$P^B$** | 194 | 3.5 |
| 4 | **$P^{B*}$** | 600 | 2.4 |

**Example 5: Synthesis of boronic ester-based networks of crosslinked polymers**

To study the impact of the chemical nature of the crosslinks and pendant groups on the mechanical and rheological properties of the networks of crosslinked polymers based on boronic esters, three different networks were made from the polymers previously synthesized. To do so, **$P^D$** and **$P^A$** were crosslinked with **$P^B$** in solution by using chloroform as solvent. Likewise, the proportion of the polymers was adjusted so as to have a ratio 1:2 between boronic esters in the polymers allowing thus to have pendant groups with different functionalities in the network upon crosslinking. Upon removing the small molecule byproducts by vacuum drying at 150 °C, the networks of crosslinked polymers were obtained and named as **$X^A$-$P^B$** where **A** and **B** represent the chemical nature of the crosslinks and pendant groups, respectively; these can be either dioxaborolanes **(DB)** or dioxazaborocanes **(DZ).** A schematic view of the networks of crosslinked polymers is presented in Figure 4.

**Example 7: Mechanical properties**

As observed in Figure 5, Young's modulus, E, of both **$X^{DZ}$-$P^{DZ}$** and **$X^{DZ}$-$P^{DB}$** are comparable and around 0.40 MPa as expected for an elastomer, and this value is slightly higher than **$X^{DB}$-$P^{DB}$** by about 20%. Interestingly, the highest value of stress at break was found to be 0.27 MPa and to correspond to **$X^{DZ}$-$P^{DB}$,** while the other two networks of crosslinked polymers shared similar values around 0.22 MPa. These findings suggest that dioxazaborocanes form stronger linkages than dioxaborolanes. On the other hand, the strains at break reported for **$X^{DZ}$-$P^{DZ}$** and **$X^{DZ}$-$P^{DB}$** are notably higher than **$X^{DB}$-$P^{DB}$** by factors of 1.7 and 2.1, respectively. We interpret this result as an indication of a plastic regime for dioxazaborocane-based crosslinks being much more dynamic than dioxaborolane-based crosslinks. Moreover, the exchange between dioxazaborocanes and dioxaborolanes evidently renders **$X^{DZ}$-$P^{DB}$** more dynamic than the fully dioxazaborocane-based networks of crosslinked polymers **$X^{DZ}$-$P^{DZ}$** under the experimental conditions. Therefore, the toughness of **$X^{DZ}$-$P^{DB}$** was the highest among the three systems, being 51 and 161% higher than that of **$X^{DZ}$-$P^{DZ}$** and **$X^{DB}$-$P^{DB}$,** respectively.

**Exemple 8: Normalized stress-relaxation at 180 °C**

Normalized stress-relaxation experiments (relaxation modulus G(t)/initial relaxation modulus G(0)) performed at 180 °C for the networks of crosslinked polymers **$X^{DB}$-$P^{DB}$, $X^{DZ}$-$P^{DZ}$** and **$X^{DZ}$-$P^{DB}$** are presented in Figure 6.

The network of crosslinked polymers **$X^{DB}$-$P^{DB}$** , which contains dioxaborolane crosslinks, does not fully relax stress under the conditions of the experiment, unlike the networks of crosslinked polymers **$X^{DZ}$-$P^{DZ}$** and **$X^{DZ}$-$P^{DB}$** which both quantitatively relax stress. Furthermore, when comparing the rate of stress relaxation, the network of crosslinked polymers **$X^{DZ}$-$P^{DZ}$** relaxes 63 % of the initial stress (line 1/e) in ca. 0.8 s, against ca. 4 s and ca. 448 s for the networks of

crosslinked polymers $X^{DZ}$-$P^{DB}$ and $X^{DB}$-$P^{DB}$, respectively. These results indicate that networks of crosslinked polymers incorporating dioxazaborocane crosslinks are more dynamic that networks of crosslinked polymers incorporating dioxaborolane crosslinks at 180 °C, resulting in materials with a significantly lower zero-shear melt viscosity and a better processability.

**Example 9: Stress relaxation response at high temperatures**

The networks of crosslinked polymers mainly relax stress through the exchange reactions between the dynamic groups. However, the relaxation process may involve complex mechanisms (or relaxation modes) depending on the chemical nature of the exchangeable groups and the architecture of the network.

Figure 7 shows the relaxation modulus G(t), of the boronic ester-based networks of crosslinked polymers at different temperatures.

$X^{DB}$-$P^{DB}$ exhibits at least two relaxation processes in the experimental timescale (Figure 7, top).

On the other hand, $X^{DZ}$-$P^{DZ}$ can relax even more than 3 decades of stress at 180 °C and more than 2 at 100 °C during the timescale of the experiment (about 90 min) as a result of a fast exchange between dioxazaborocanes within this temperature window (Figure 7, center). Therefore, the value of r* obtained at 180 °C gives a value of 0.8 s.

$X^{DZ}$-$P^{DB}$ relax a little more than 2 and 1 decades of stress at 180 and 100 °C, respectively, within around 90 min. The value of $\tau^*$ calculated for $X^{DZ}$-$P^{DB}$ was 3.68 s at 180°C.

$X^{DB}$-$P^{DB}$ showed two relaxation modes governing the short and long-time viscoelastic response, whereas $X^{DZ}$-$P^{DZ}$ and $X^{DZ}$-$P^{DB}$ featured a much faster and broad relaxation featuring characteristic relaxation times ($\tau^*$) of 0.8 and 3.68 s at 180 °C, respectively, highlighting again the fast dynamics of dioxazaborocanes.

Thus, dioxazaborocane-containing networks of crosslinked polymers are highly processable in contrast to dioxaborolane networks of crosslinked polymers as a result of their fast dynamics.

## Claims

**1.** - A material under the form of a network of crosslinked polymer(s) comprising:

- at least one polymer P carrying pendant groups p1; and
- at least one compound C carrying groups p2,

said pendant groups p1 each comprising a linking arm binding it to its polymer backbone and being terminated by a function constituting one exchange partner, and said groups p2 each comprising a function constituting the other exchange partner,

the at least one polymer P and the least one compound C reacting together through pendant groups p1 and groups p2 via exchange reaction resulting in crosslinking points, and the crosslinking points being able to get exchanged with another crosslinking point through an exchange reaction, and/or being able to be released through an exchange reaction with a non-polymer co-product of the exchange reaction,

one of the exchange partners is at least one from:

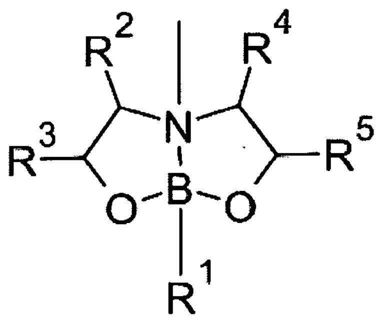

wherein:

- the nitrogen atom is linked to the linking arm in the case of the polymer P or to a hydrocarbon radical in the case of the compound C;
- $R^1$ is a hydrocarbon radical linked to the boron atom of the dioxazaborocane ring by a covalent bond through a carbon atom; and
- $R^2$ to $R^5$, identical or different, each represent hydrogen or a hydrocarbon radical, or $R^2$ and $R^3$ on one hand

and $R^4$ and $R^5$ on the other hand form together an aliphatic or aromatic ring,

and

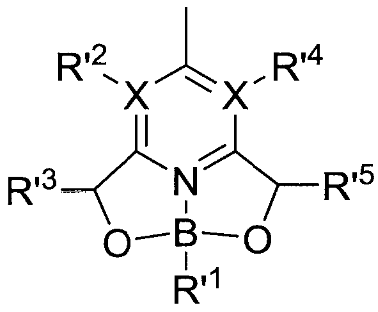

wherein:

- the carbon atom in para of the nitrogen atom of the heterocycle involved in the N→B dative bond is linked to the linking arm in the case of the polymer P or to a hydrocarbon radical in the case of the compound C;
- $R'^1$ is a hydrocarbon radical linked to the boron atom of the dioxazaborocane ring by a covalent bond through a carbon atom;
- X is N or C, and when X is N $R'^2$ and $R'^4$ being absent; and
- $R'^2$ and $R'^4$, when present, and $R'^3$ and $R'^5$, identical or different, each represent hydrogen or a hydrocarbon radical, or $R'^2$ and $R'^3$ on one hand and $R'^4$ and $R'^5$ on the other hand form together an aliphatic or aromatic ring,

and the other exchange partner is selected from:

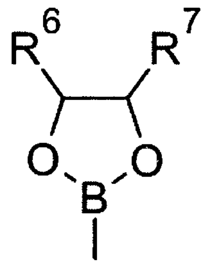

wherein:

- the boron atom is linked to the linking arm in the case of the polymer P or to a hydrocarbon radical in the case of the compound C; and
- $R^6$ to $R^7$, identical or different, each represent hydrogen or a hydrocarbon radical, or $R^6$ and $R^7$ form together an aliphatic or aromatic ring;

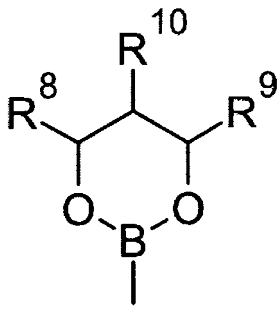

wherein:

- the boron atom is linked to the linking arm in the case of the polymer P or to a hydrocarbon radical in the case of the compound C; and
- $R^8$ to $R^{10}$, identical or different, each represent hydrogen or a hydrocarbon radical, or $R^8$ and $R^{10}$ on one hand and $R^9$ and $R^{10}$ on the other hand form together an aliphatic or aromatic ring;

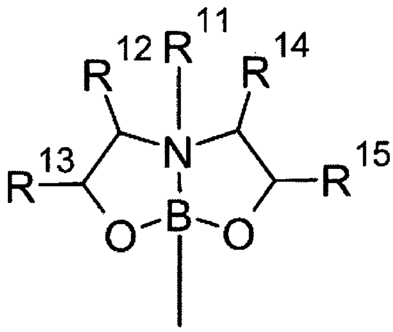

wherein:

- the boron atom is linked to the linking arm in the case of the polymer P or to a hydrocarbon radical in the case of the compound C;
- $R^{11}$ is H or a hydrocarbon radical linked to the nitrogen atom of the dioxazaborocane ring by a covalent bond through a carbon atom; and
- $R^{12}$ to $R^{15}$, identical or different, each represent hydrogen or a hydrocarbon radical, or $R^{12}$ and $R^{13}$ on one hand and $R^{14}$ and $R^{15}$ on the other hand form together an aliphatic or aromatic ring,

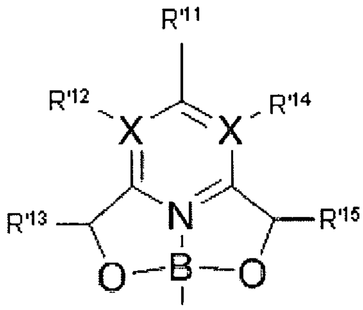

wherein:

- the boron atom is linked to the linking arm in the case of the polymer P or to a hydrocarbon radical in the case of the compound C;
- $R'^{11}$ is H or a hydrocarbon radical;
- X is N or C, and when X is N $R'^{12}$ and $R'^{14}$ being absent; and
- $R'^{12}$ and $R'^{14}$, when present, and $R'^{13}$ and $R'^{15}$, identical or different, each represent hydrogen or a hydrocarbon radical.

2. - The material according to claim 1, **characterized in** the the compound C is a polymer, so-called second polymer P', groups p2 being pendant groups each comprising a linking arm binding it to its polymer backbone and being terminated by said function constituting one exchange partner.

3. - The material according to claim 2, **characterized in that** the first and second polymers P and P' are chosen from: polyolefins and their copolymers, especially polyethylene, polypropylene and their copolymers, polystyrene and its copolymers, poly(meth)acrylates and their copolymers, polydienes and their copolymers, especially polybutadiene, polyisoprene and their copolymers, polyesters and their copolymers, especially polyethylene terephthalate (PET), polybutylene terephthalate (PBT) and their copolymers.

4. - The material according to one of claims 2 or 3, **characterized in that** the polymer backbone of at least one of the first polymer P and the second polymer P' has further pendant groups different from pendant groups p1 and p2.

**5.** - The material according to one of claims 2 to 4, **characterized in that** the first and second polymers P and P' are poly(meth)acrylates and the linking arm of the pendant group p1 is of formula $-C(=O)O-(CH_2)_m-$, m being an integer from 1 to 4, and the linking arm of the group p2 is of formula $-C(=O)O-(CH_2)_q-OC(=O)$-Phenyl-, q being an integer from 1 to 4, the pendant groups p1 and p2 being linked to their polymer backbone through the carbonyl group.

**6.** - The material according to one of claims 4 and 5, **characterized in that** the further pendant groups different from pendant groups p1 and p2 are of formula $-C(=O)O-R^{16}$, $R^{16}$ representing linear or branched, $C_1$-$C_{12}$ alkyl such as dodecyl or 2-ethylhexyl.

**7.** - The material according to claim 1, **characterized in that** the compound C is chosen from:

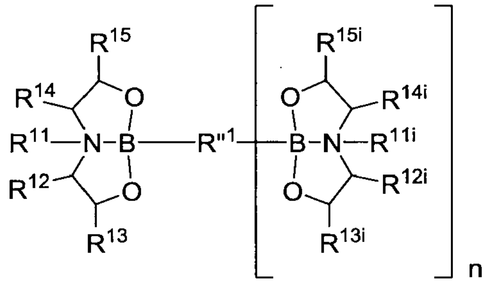

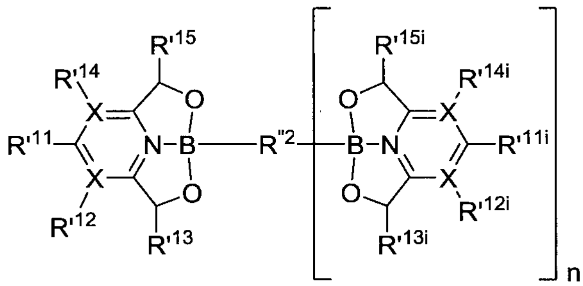

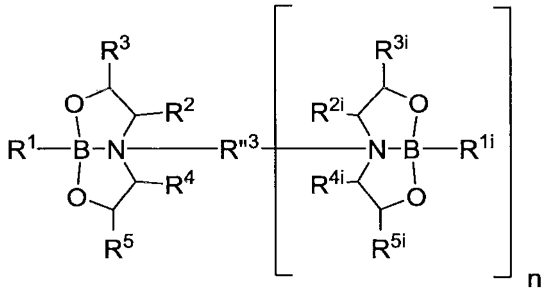

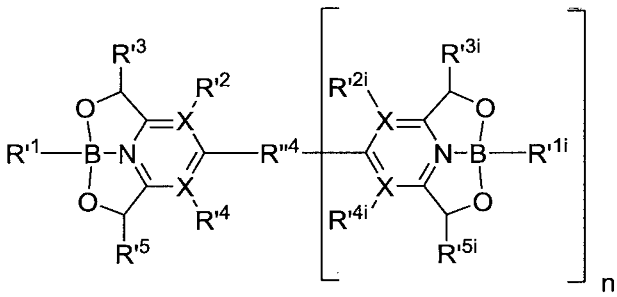

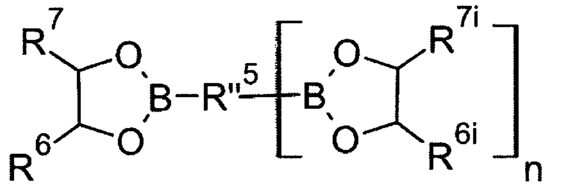

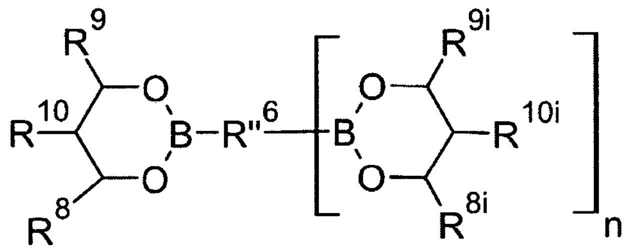

wherein:

- X, $R^1$ and $R^6$ to $R^{15}$ and $R'^1$ and $R'^{11}$ to $R'^{15}$ are as defined above;
- n is an integer comprised between 1 and 3;
- $R''^1$ to $R''^5$ are a hydrocarbon radical., to which are linked, each time by different carbon atoms, the n+1 boron containing cycles;
- $R^{1i}$ is a hydrocarbon radical linked to the boron atom of the dioxazaborocane ring by a covalent bond through a carbon atom; and
- $R^{2i}$ to $R^{5i}$, identical or different, each represent hydrogen or a hydrocarbon radical, or $R^{2i}$ and $R^{3i}$ on one hand and $R^{4i}$ and $R^{5i}$ on the other hand form together an aliphatic or aromatic ring,
- $R'^{1i}$ is a hydrocarbon radical linked to the boron atom of the dioxazaborocane ring by a covalent bond through a carbon atom;
- $R'^{2i}$ and $R'^{4i}$, when X is C, and $R'^{3i}$ and $R'^{5i}$, identical or different, each represent hydrogen or a hydrocarbon radical, or $R'^{2i}$ and $R'^{3i}$ on one hand and $R'^{4i}$ and $R'^{5i}$ on the other hand, when X is C, form together an aliphatic or aromatic ring;
- $R^{6i}$ to $R^{71}$, identical or different, each represent hydrogen or a hydrocarbon radical, or $R^{6i}$ and $R^{7i}$ form together an aliphatic or aromatic ring;
- $R^{8i}$ to $R^{10i}$, identical or different, each represent hydrogen or a hydrocarbon radical, or $R^{8i}$ and $R^{10i}$ on one hand and $R^{9i}$ and $R^{10i}$ on the other hand form together an aliphatic or aromatic ring;
- $R^{11i}$ is H or a hydrocarbon radical linked to the nitrogen atom of the dioxazaborocane ring by a covalent bond through a carbon atom;
- $R^{12i}$ to $R^{15i}$, identical or different, each represent hydrogen or a hydrocarbon radical, or $R^{12i}$ and $R^{13i}$ on one hand and $R^{14i}$ and $R^{15i}$ on the other hand form together an aliphatic or aromatic ring;
- $R'^{11i}$ is H or a hydrocarbon radical; and
- $R'^{12i}$ and $R'^{14i}$, when X is C, and $R'^{13i}$ and $R'^{15i}$, identical or different, each represent hydrogen or a hydrocarbon radical.

**8.** - The material according to one of claims 1 to 7, **characterized in that** the material further comprises at least one compound arising from the crosslinking exchange reaction, of formula:

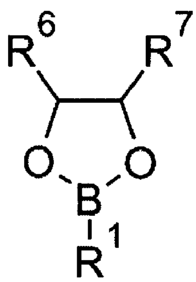

and/or

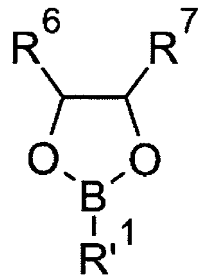

and /or

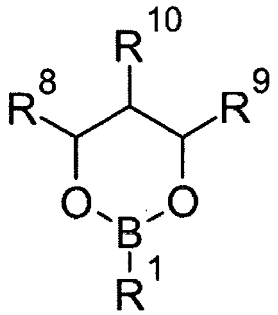

and/or

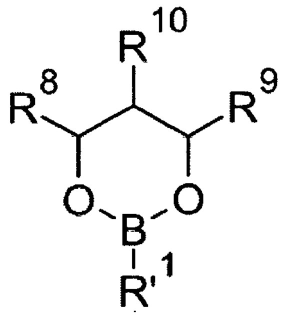

and /or

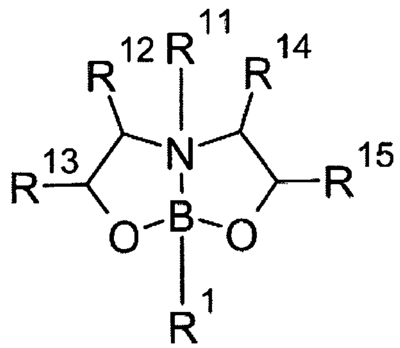

,and/or

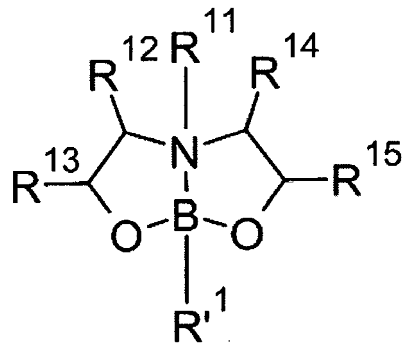

and /or

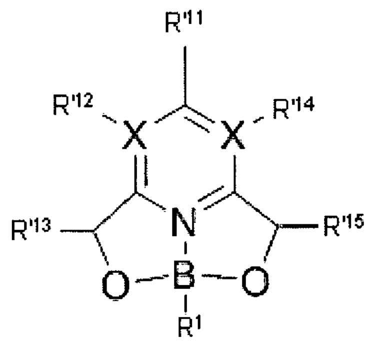

and /or

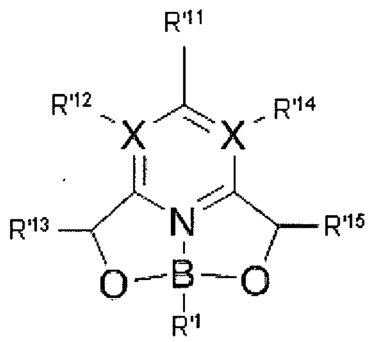

X, $R^1$ and $R^6$ to $R^{15}$ and $R'^1$ and $R'^{11}$ to $R'^{15}$ being as defined in claim 1.

**9.** - The material according to one of claims 1 to 8, **characterized in that**:

- $R^1$ is phenyl; and/or
- at least one from $R^6$ and $R^7$ is methyl, the other being hydrogen; and/or
- $R^2$ to $R^5$ and $R^8$ to $R^{15}$ are each hydrogen; and/or
- $R^{11}$ is hydrogen, methyl or ethyl; and
- $R'^1$ is phenyl; and/or
- $R'^{12}$ to $R'^{15}$ are each hydrogen; and/or
- $R'^{11}$ is hydrogen, methyl or ethyl.

**10.** - The material according to one of claims 1 to 9, **characterized in that** it further comprises a solvent chosen from: mineral, natural or silicone oils, hydrocarbon solvents, water, alcohols, polyethers, fatty esters.

**11.** - The material according to one of claims 1 to 10, **characterized in that** it further comprises at least one polymer

chosen from polyolefins and their copolymers, especially polyethylene, polypropylene and their copolymers, polystyrene and its copolymers, poly(meth)acrylates and their copolymers, polydienes and their copolymers, especially polybutadiene, polyisoprene and their copolymers, polyesters and their copolymers, especially PET, PBT and their copolymers, polyvinyl chloride and its copolymers, polyurethanes and their copolymers, polysiloxanes and their copolymers, especially polydimethylsiloxane and its copolymers.

**12.** - The material according to one of claims 1 to 11, **characterized in that** a part of the groups p1 and p2 remains unreacted in the material and is still able to undergo an exchange reaction within the material.

**13.** - The material according to one of claims 1 to 12, **characterized in that** it presents an insoluble weight fraction greater than 0.1%, preferably greater than 0.5%, 1%, 2%, 5%, 10%, 20%, 30%, 40%, 50% and 70%, after 48 hours of immersion at a weight fraction of 1/10 in a good non-reactive solvent at atmospheric pressure and at a temperature between the melting temperature and the boiling temperature of said good non-reactive solvent.

**14.** - A method for the preparation of a material according to one of claims 1 to 13, **characterized in that** the first polymer P and the second compound C are mixed together.

**15.** - The method according to claim 14, **characterized in that** the mixing is conducted in a solvent chosen from: ethyl acetate, butyl acetate, acetone, acetonitrile, benzyl alcohol, acetic anhydride, anisole, benzene, butanol, butanone, chlorobenzene, chloroform, cyclohexane, dichloroethane, dichloromethane, dimethylformamide, dimethylsulfoxide, dioxane, water, ethanol, glycol ether, diethyl ether, ethylene glycol, heptane, hexane, mineral oils, natural oils, synthetic oils, hydrocarbons, methanol, pentane, propanol, propoxypropane, tetrachloroethane, tétrachlorométhane, tetrahydrofuran, toluene, trichlorobenzene, xylene, and their mixtures

**16.** - A recycling method of a material according to claims 1 to 13 in a spent state, **characterized in that** it comprises the steps of:

- cutting and shredding the materials in a spent state into pieces with a diameter of 1 μm to 1 cm, preferably 10 μm to 5 mm, even more preferably of 100 μm to 2 mm;
- shaping the material by compression molding, injection molding or extrusion in order to obtain a new material.

**17.** - The recycling method according to claim 16, **characterized in that** it further comprises washing and drying steps before the cutting and shredding step.

[Fig. 1]

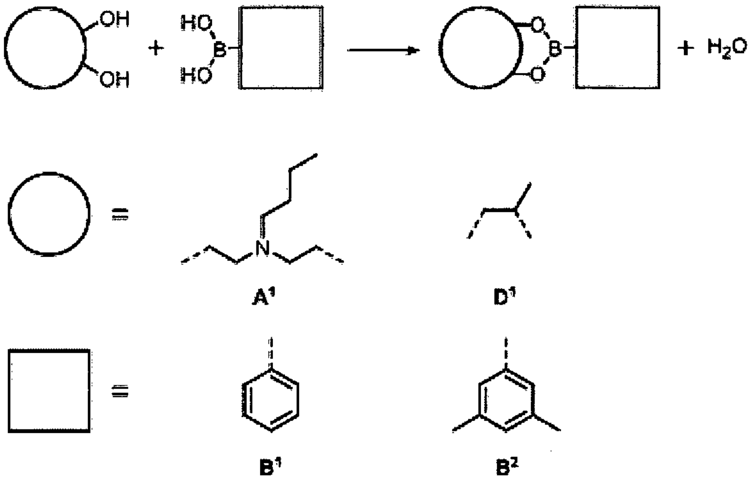

$A^1$ $D^1$ $B^1$ $B^2$

[Fig. 2]

$D^1B^2$ $A^1B^1$ $D^1B^1$ $A^1B^2$

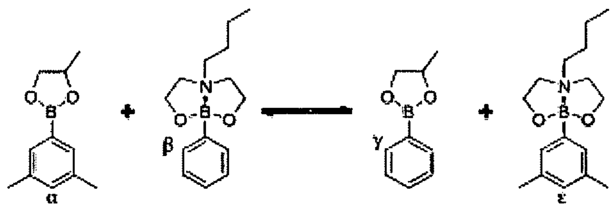

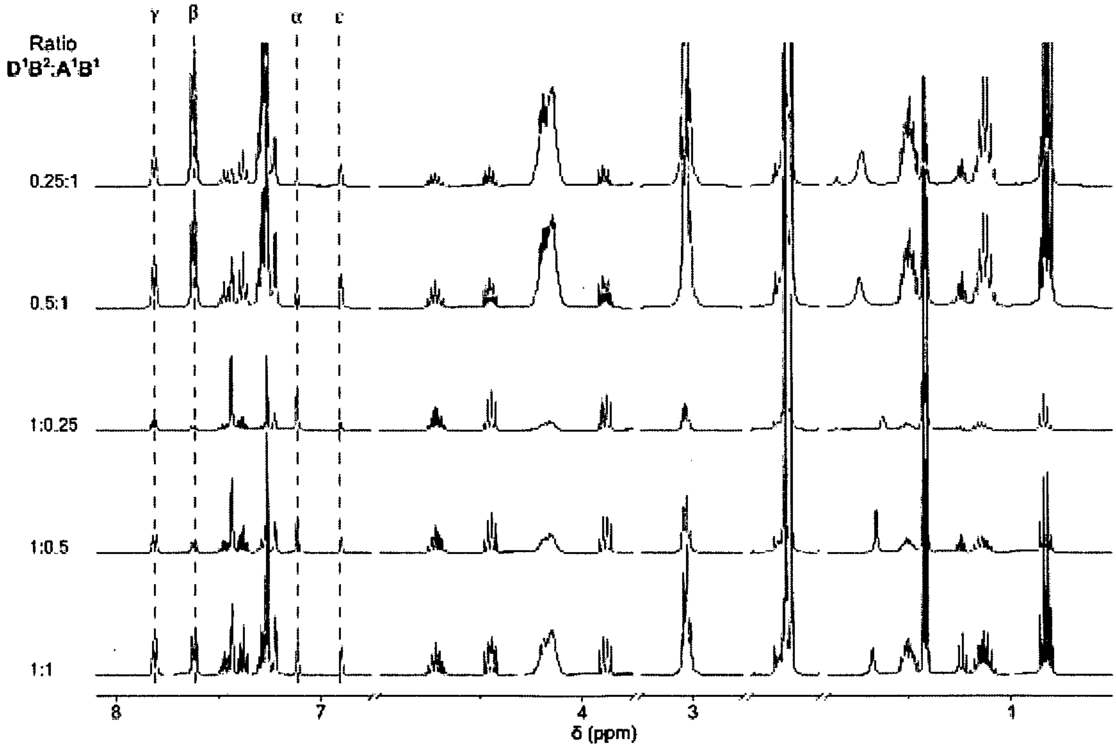

[Fig. 3]

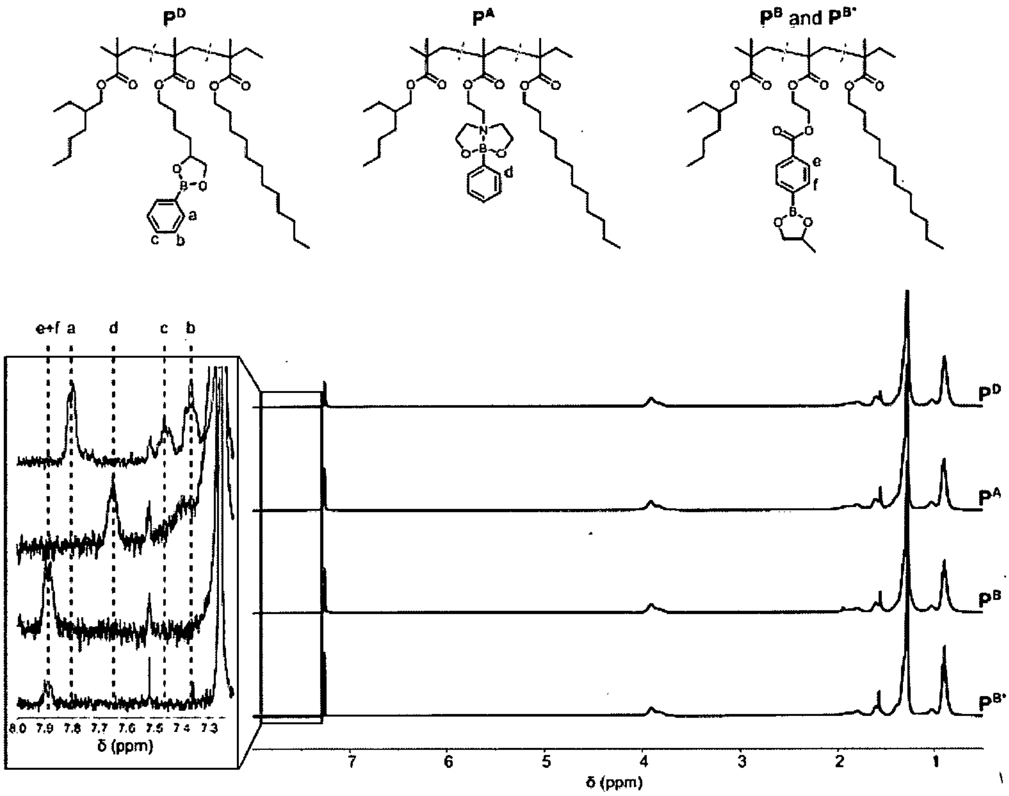

[Fig. 4]

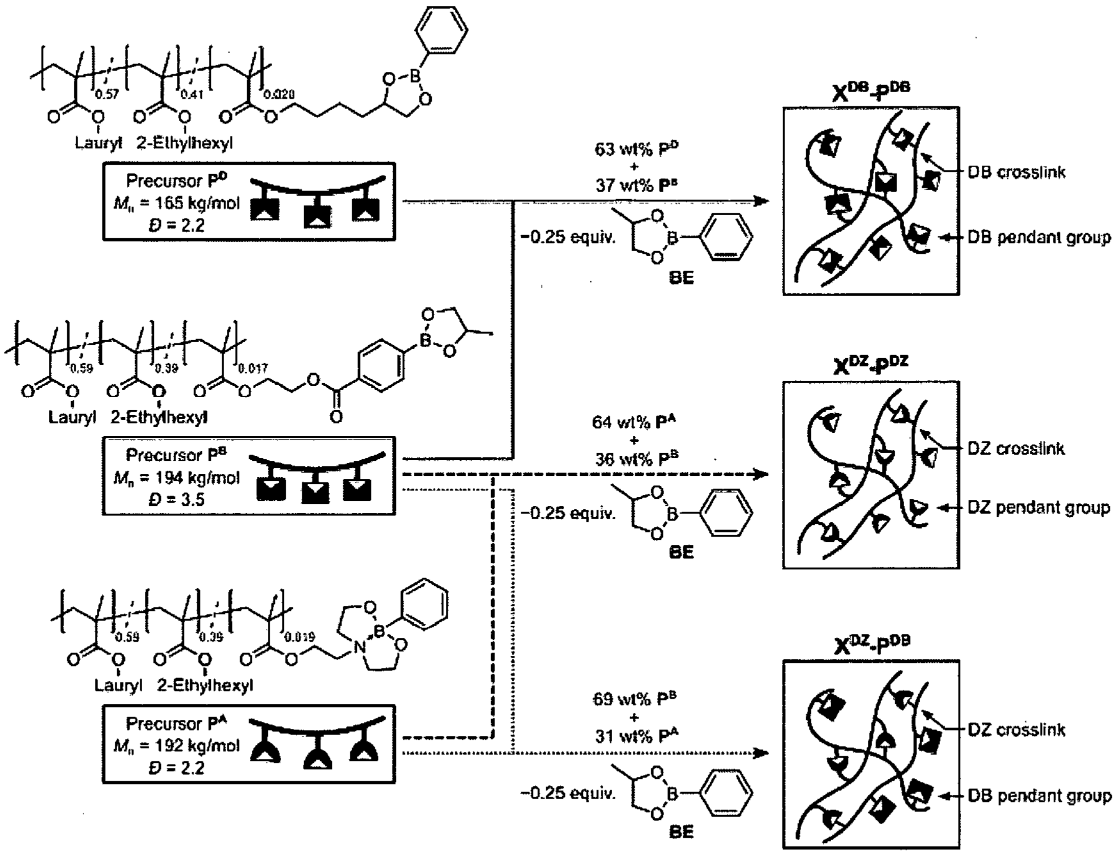
Lauryl 2-Ethylhexyl
Precursor P^D
M_n = 165 kg/mol
Đ = 2.2
Lauryl 2-Ethylhexyl
Precursor P^B
M_n = 194 kg/mol
Đ = 3.5
Lauryl 2-Ethylhexyl
Precursor P^A
M_n = 192 kg/mol
Đ = 2.2
63 wt% P^D
+
37 wt% P^B
−0.25 equiv.
BE
64 wt% P^A
+
36 wt% P^B
−0.25 equiv.
BE
69 wt% P^B
+
31 wt% P^A
−0.25 equiv.
BE
X^DB-P^DB
DB crosslink
DB pendant group
X^DZ-P^DZ
DZ crosslink
DZ pendant group
X^DZ-P^DB
DZ crosslink
DB pendant group

[Fig. 5]

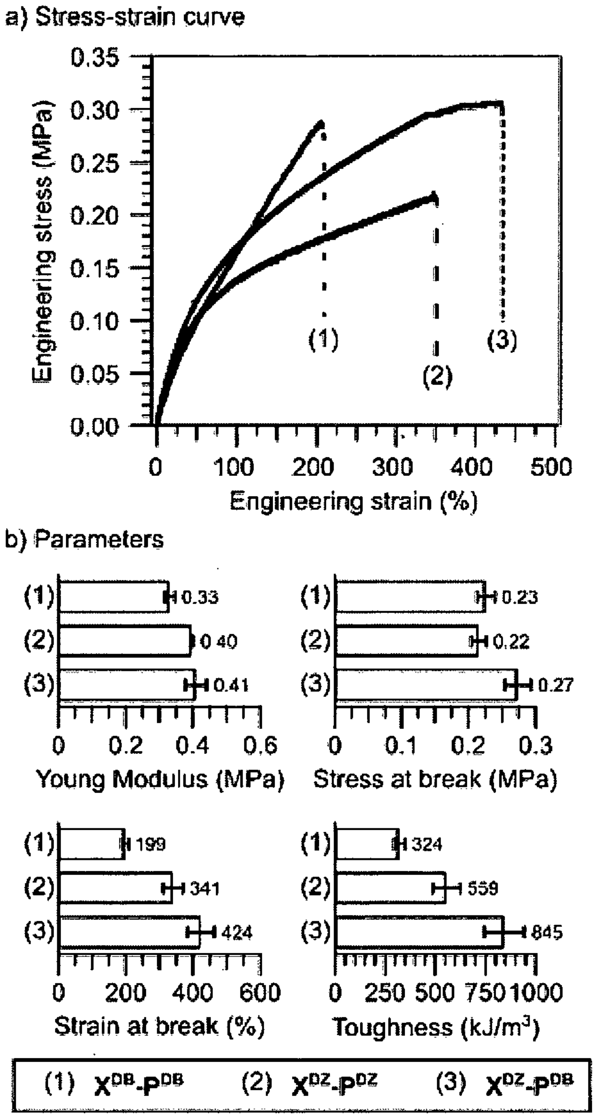
a) Stress-strain curve
Engineering stress (MPa)
0.35
0.30
0.25
0.20
0.15
0.10
0.05
0.00
(1)
(2)
(3)
0
100
200
300
400
500
Engineering strain (%)
b) Parameters
(1) 0.33
(2) 0 40
(3) 0.41
0 0.2 0.4 0.6
Young Modulus (MPa)
(1) 0.23
(2) 0.22
(3) 0.27
0 0.1 0.2 0.3
Stress at break (MPa)
(1) 199
(2) 341
(3) 424
0 200 400 600
Strain at break (%)
(1) 324
(2) 559
(3) 845
0 250 500 750 1000
Toughness (kJ/m3)
(1) XDB-PDB
(2) XDZ-PDZ
(3) XDZ-PDB

[Fig. 6]

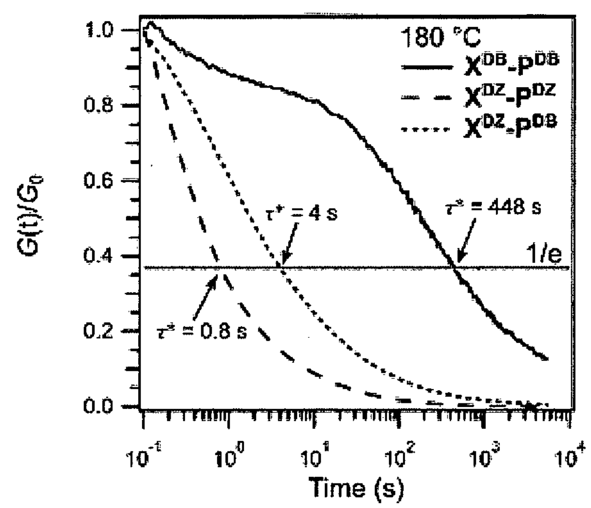
180 °C
$X^{DB}$-$P^{DB}$
$X^{DZ}$-$P^{DZ}$
$X^{DZ}$-$P^{DB}$
τ* = 4 s
τ* = 448 s
1/e
τ* = 0.8 s
G(t)/G0
Time (s)

[Fig. 7]

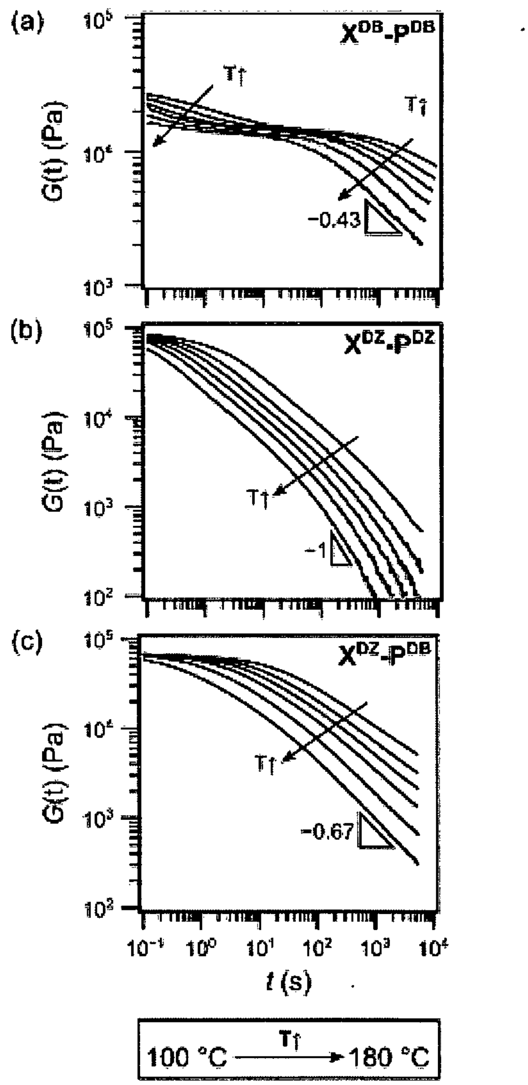
(a)
$X^{DB}$-$P^{DB}$
T↑
−0.43
(b)
$X^{DZ}$-$P^{DZ}$
T↑
−1
(c)
$X^{DZ}$-$P^{DB}$
T↑
−0.67
G(t) (Pa)
t (s)
100 °C T↑ 180 °C

Europäisches Patentamt
European Patent Office
Office européen des brevets

# EUROPEAN SEARCH REPORT

Application Number
EP 24 31 5351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2017/029412 A1 (ECOLE SUPERIEURE PHYSIQUE & CHIMIE IND VILLE DE PARIS [FR]) 23 February 2017 (2017-02-23)<br>* Monomer M1 and M1OH;<br>page 44, line 1 - line 4; claim 1;<br>examples 4.1, 9.2 *<br>----- | 1-17 | INV.<br>C08F8/42 |
| A | WO 2017/029413 A1 (ECOLE SUPERIEURE PHYSIQUE & CHIMIE IND VILLE DE PARIS [FR]) 23 February 2017 (2017-02-23)<br>* Monomer M1 and M1OH;<br>page 44, line 1 - line 4; claim 1;<br>examples 4.1,9.2 *<br>----- | 1-17 | |
| A | ITO YUMIKO ET AL: "Functionalization of amine-cured epoxy resins by boronic acids based on dynamic dioxazaborocane formation",<br>POLYMER CHEMISTRY,<br>vol. 11, no. 33, 2 March 2020 (2020-03-02), pages 5356-5364, XP093237615,<br>Cambridge<br>ISSN: 1759-9954, DOI: 10.1039/D0PY00048E<br>Retrieved from the Internet:<br>URL:http://pubs.rsc.org/en/content/articlepdf/2020/PY/D0PY00048E><br>* Scheme 2 *<br>----- | 1-17 | |
| | | | TECHNICAL FIELDS SEARCHED (IPC) |
| | | | C08F |

The present search report has been drawn up for all claims

1

| Place of search | Date of completion of the search | Examiner |
|---|---|---|
| The Hague | 10 January 2025 | Giani, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 31 5351

This annex lists the patent family members relating to the patent documents cited in the above-mentioned European search report. The members are as contained in the European Patent Office EDP file on
The European Patent Office is in no way liable for these particulars which are merely given for the purpose of information.

10-01-2025

| Patent document cited in search report | Publication date | Patent family member(s) | Publication date |
|---|---|---|---|
| WO 2017029412 A1 | 23-02-2017 | CA 3032023 A1 | 23-02-2017 |
| | | CA 3032026 A1 | 23-02-2017 |
| | | CN 108368206 A | 03-08-2018 |
| | | CN 108473629 A | 31-08-2018 |
| | | CN 111410711 A | 14-07-2020 |
| | | DK 3337834 T3 | 09-09-2019 |
| | | EP 3337833 A1 | 27-06-2018 |
| | | EP 3337834 A1 | 27-06-2018 |
| | | FR 3040172 A1 | 24-02-2017 |
| | | FR 3040173 A1 | 24-02-2017 |
| | | JP 7018688 B2 | 14-02-2022 |
| | | JP 7125211 B2 | 24-08-2022 |
| | | JP 2018525497 A | 06-09-2018 |
| | | JP 2018525498 A | 06-09-2018 |
| | | US 2017051117 A1 | 23-02-2017 |
| | | US 2017051144 A1 | 23-02-2017 |
| | | US 2018265691 A1 | 20-09-2018 |
| | | WO 2017029412 A1 | 23-02-2017 |
| | | WO 2017029413 A1 | 23-02-2017 |
| WO 2017029413 A1 | 23-02-2017 | CA 3032023 A1 | 23-02-2017 |
| | | CA 3032026 A1 | 23-02-2017 |
| | | CN 108368206 A | 03-08-2018 |
| | | CN 108473629 A | 31-08-2018 |
| | | CN 111410711 A | 14-07-2020 |
| | | DK 3337834 T3 | 09-09-2019 |
| | | EP 3337833 A1 | 27-06-2018 |
| | | EP 3337834 A1 | 27-06-2018 |
| | | FR 3040172 A1 | 24-02-2017 |
| | | FR 3040173 A1 | 24-02-2017 |
| | | JP 7018688 B2 | 14-02-2022 |
| | | JP 7125211 B2 | 24-08-2022 |
| | | JP 2018525497 A | 06-09-2018 |
| | | JP 2018525498 A | 06-09-2018 |
| | | US 2017051117 A1 | 23-02-2017 |
| | | US 2017051144 A1 | 23-02-2017 |
| | | US 2018265691 A1 | 20-09-2018 |
| | | WO 2017029412 A1 | 23-02-2017 |
| | | WO 2017029413 A1 | 23-02-2017 |

EPO FORM P0459

For more details about this annex : see Official Journal of the European Patent Office, No. 12/82